# EUROPÄISCHE PATENTSCHRIFT

(11) **EP 1 436 140 B1**
(45) Veröffentlichungstag und Bekanntmachung des Hinweises auf die Patenterteilung: **23.11.2005**
(21) Anmeldenummer: 02776965.2
(22) Anmeldetag: 03.09.2002
(51) Int. Cl.: B29C 70/38

(54) **VERFAHREN UND VORRICHTUNG ZUM AUTOMATISIERTEN HANDHABEN VON HARZMATTEN BEI DER HERSTELLUNG VON SMC-TEILEN**
METHOD AND DEVICE FOR THE AUTOMATED HANDLING OF RESIN-IMPREGNATED MATS DURING THE PRODUCTION OF SMC PARTS
PROCEDE ET DISPOSITIF POUR MANIPULER DE FACON AUTOMATISEE DES MATS IMPREGNES DE RESINE LORS DE LA PRODUCTION DE PIECES EN SMC

(30) Priorität: 20.10.2001 DE 10152232
(43) Veröffentlichungstag der Anmeldung: 14.07.2004
(73) Patentinhaber: DaimlerChrysler AG, 70567 Stuttgart (DE)
(72) Erfinder: HABISREITINGER, Uwe, 72290 Lossburg (DE); NORDMANN, Bernhard, 71034 Böblingen (DE)
(86) Internationale Anmeldenummer: PCT/EP2002/009831
(87) Internationale Veröffentlichungsnummer: WO 2003/035375

(56) Entgegenhaltungen:
- EP-A- 1 099 538
- US-A- 4 571 320
- US-A- 4 793 657

## Beschreibung

Die Erfindung betrifft ein Verfahren und eine Vorrichtung zum automatisierten Handhaben von Harzmatten bei der Herstellung von SMC-Teilen.

Gemäß einem Beitrag von R. Brüssel und U. Weber "SMC-Teile vollautomatisch herstellen", veröffentlicht in der Zeitschrift Kunststoffe, Jahrgang 79 (1989), Seiten 1149-1154 - nachfolgend kurz mit [1] zitiert - wird bei der Herstellung von SMC-Teilen von einer bestimmten Menge eines Gemisches von reaktionsfähigem duroplastischem Kunstharz und Fasern ausgegangen, die gewichtsmäßig auf das fertige Bauteil abgestimmt ist. Und zwar wird die abgestimmte Rohstoffmenge durch Ausschneiden von rechteckigen Zuschnitteilen bestimmter Größe aus einer in Rollenform angelieferten Fasermattenbahn (Prepreg-Bahn) und durch Zusammenlegen der Zuschnitteile zu einem Mattenstapel gewonnen. Ein solcher Mattenstapel wird lagegenau in ein geöffnetes Formwerkzeug einer Presse eingelegt, das auf eine Temperatur beheizt ist, bei der das reaktionsfähige Kunstharz chemisch reagiert und abbindet. Durch anfänglich langsames Schließen des Formwerkzeuges wird der eingebrachte Rohstoff zunächst lediglich erwärmt, wodurch das Kunstharz noch weicher und fließfähiger wird. Anschließend wird das Formwerkzeug unter kontrollierter Kraft und Geschwindigkeit geschlossen, wobei der erweichte Rohstoff seitlich wegfließt und dabei die Kavität des Formwerkzeuges vollständig ausfüllt. Nach diesem Ausfüllen der Gravur wird das Formwerkzeug noch eine Zeit lang mit definierter Kraft geschlossen gehalten, so daß das Kunstharz vollständig ausreagieren und aushärten kann. Erst dann kann das Formwerkzeug geöffnet und das fertige SMC-Teil daraus entnommen werden.

Bei dem Verfahren nach [1] sind die als Rohmasse zu einem Mattenstapel aufgeschichteten Zuschnitteile alle rechteckig geformt und weisen in der einen, quer zur Harzmattenbahn liegenden Richtung untereinander alle die gleiche Breite, nämlich die Breite der randseitig beschnittenen Harzmattenbahn selber auf. Die Zuschnitteile werden durch Querschneiden der Harzmattenbahn erzeugt, wobei die abgeschnittenen Zuschnitteile auf einer beweglichen Plattform abgelegt werden, die in unmittelbarer Nachbarschaft zur Querschneidevorrichtung angeordnet und in Form eines Rechens - Stapelrechen - ausgebildet ist. Sobald die auf dem Stapelrechen aufgeschichten Zuschnitteile die gewünschte Lagenzahl erreicht haben, wird der Harzmattenstapel durch den beweglichen Stapelrechen an einen in der Nähe der Presse angeordneten, ähnlich aufgebauten Übergaberechen übergeben. Und zwar wird durch vertikales Absenken des Stapelrechens auf den Übergaberechen bei gegenseitig auf Lücke angeordneten Tragzinken der Harzmattenstapel auf dem Übergaberechen abgelegt. In letzteren ist ein mit seinen Zinken vertikal ausgerichteter Halterechen integriert, gegenüber dem der Übergaberechen horizontal beweglich geführt und mit einem entsprechenden Verschiebeantrieb versehen ist. Zum Ablegen des Harzmattenstapels im Unterwerkzeug der Presse wird der Übergaberechen mit dem darauf liegenden Harzmattenstapel oberhalb der Gravur des Unterwerkzeuges bei u.U. leichter Neigung der Zinken des Übergaberechens positioniert. Auf einen bestimmten Steuerbefehl hin kann der Übergaberechen gegenüber dem Halterechen horizontal bzw. in Richtung der Tragzinken zurückgezogen werden, wobei der aufliegende Harzmattenstapel in das geöffnete Formwerkzeug übergeben und in diesem mehr oder weniger lagegenau abgelegt werden wird. Einen ganz ähnlichen Übergaberechen zeigt die DE 39 15 380 A1 = [3]. Ein Nachteil des Verfahrens nach [1] besteht darin, daß alle Zuschnitteile rechteckig und im Prinzip gleich groß sind, was jedoch nur für ein eingeschränktes Spektrum von Bauteilen ohne weiteres zugelassen werden kann.

Ein weiterer Nachteil der Anordnung nach [1] oder des Übergaberechens nach [3] ist in der dort gezeigten Handhabungseinrichtung selber begründet, die ein unmittelbares Wiegen der Zuschnitteile nicht zuläßt. Außerdem wären - abgesehen vom bloßen Aufstapeln - andere Handhabungsvorgänge mit einzelnen Mattenzuschnitten mit dem bekannten Handhabungsrechen nur möglich, wenn der Einzelzuschnitt auf einer speziell für den Rechen geformten, unterbrochenen Unterlage aufliegt, was in der Regel jedoch nicht der Fall ist. Die Positionierungsgenauigkeit beim Handhaben einzelner Mattenzuschnitte oder ganzer Harzmattenstapel leidet jedoch darunter, daß das zu handhabende Gut bei der Übergabe schwerkraft- und reibungsbedingt eine unkontrollierte Eigenbewegung ausführt. Nachdem die Tragzinken des Übergaberechens eine ebene Ablagefläche definieren, die Gravur des Unterwerkzeuges jedoch uneben ist, muß der Übergaberechen beim Übergeben der Harzmatten einen gewissen Mindestabstand in Vertikalrichtung zur Gravur einhalten. Im übrigen werden die Harzmatten aufgrund der Rückzugbewegung des Übergaberechens gegenüber dem Halterechen - von einer Mattenseite beginnend - voranschreitend an die Gravur übergeben, wobei die Harzmatten sich an der Übergabestelle vorübergehen und lokal S-förmig verformt. Die letztendlich von der Harzmatte auf der Gravur eingenommene Position wird durch das anfängliche, erste Aufsetzen des als erstes übergeben Mattenrandes auf der Gravur bestimmt. Je nach Lappigkeit der Harzmatte kann der anfängliche Aufsetzpunkt der Harzmatte - ganz abgesehen von der streuenden vertikalen und/oder horizontalen Relativlage zwischen Übergaberechen und Gravur zu Beginn der Übergabe - mehr oder weniger weit vorne oder hinten in Bezug auf die Rückzugrichtung des Übergaberechens liegen. Hierbei beeinflussen zwei unterschiedliche Phänomene, die beide mit der mehr oder weniger großen Weichheit der Harzmatten zusammenhängen, diese Streuung des anfänglichen Aufsetzpunktes wesentlich. Zum einen hängt eine weiche Harzmatte schwerkraftbedingt steiler von den freien Enden der Tragzinken herunter als eine steife Harzmatte, so daß eine weiche Harzmatte weiter hinten aufsetzen wird als eine steife Harzmatte. Zum anderen wird eine weiche und/oder klebrigere Harzmatte sich reibungsbedingt stärker auf den Tragzinken des Übergaberechens in Rückzugsrichtung aufstauchen als eine steife und/oder weniger klebrige Harzmatte. Demgemäß wird auch aus diesem Grund eine weiche Harzmatte weiter hinten aufsetzen als eine steife Harzmatte. Der schwerkraftbedingte und der reibungsbedingte Streueinfluß des Weichheitszustandes der Harzmatten addieren sich also in der gleichen Richtung. Diese Einflüssen können praktisch nicht erfaßt und durch eine unterschiedliche Positionierung der Anfangsstellung des Übergaberechens kompensiert werden. Beim Arbeiten mit dem aus [1] oder [3] bekannten Übergaberechen muß also mit einer erheblichen Streuung der Übergabeposition der Harzmatten in der Gravur des Unterwerkzeuges gerechnet werden, was sich unmittelbar auf die Werkstückqualität des hergestellten Preßteils auswirkt. In Richtung des Seitenversatzes der tatsächlichen Position gegenüber der Soll-Position ist das preßgeformmte Werkstück tendenziell zu dick und in der gegenüberliegenden Richtung ist es eher zu dünn.

Die DE 40 29 910 A1 = [2] zeigt eine Presse zur Herstellung von SMC-Teilen, bei der beiderseits sowohl auf dem Niveau des Unterwerkzeugs als auch auf dem Niveau des angehobenen Oberwerkzeugs gegenüberliegend jeweils eine austauschbare Hilfsvorrichtung vorgesehen ist, von denen jeweils eine aufgrund einer sinnreichen Schienenanordnung bei geöffnetem Pressenzustand in die unmittelbare Gegenüberstellung zur Gravur des Unterwerkzeugs bzw. Oberwerkzeugs in die Presse eingefahren werden kann, wobei nacheinander unterschiedliche Hilfsvorrichtungen wechselseitig in die Presse einfahrbar sind. Die gerüstartig aufgebauten, fahrbaren Hilfsvorrichtungen sind an das jeweilige Preßwerkzeug adaptiert und aufgrund eingebauter, steuerbarer Gerätschaften auf unterschiedliche Aufgaben ausgerichtet, z.B. Matten oder Einpreßteile einlegen, Fertigteil entnehmen, Werkzeug reinigen. Eines der dem Unterwerkzeug zugeordneten Hilfsvorrichtungen ist zum Neubestücken des Unterwerkzeugs vorgesehen, nämlich zum Einlegen des Harzmattenstapels und von Einpreßteilen. Dieser Zweck und die Ausbildung der zuletzt erwähnte Hilfsvorrichtung können [2] jedoch nur recht kursorisch entnommen werden. Zeichnerisch sind lediglich zwei im Abstand des Gesamtmaßes des Fertigteils beabstandete, zueinander spiegelsymmetrisch angeordnete, in der Beschreibung nicht erwähnten Einheiten angedeutet, die zur Handhabung des Harzmattenstapels dienen könnten. Es bleibt jedoch offen, ob es sich dabei um Nadelgreifer, um Zangengreifer oder um sonstige Greifer handelt; ferner ist unklar, ob und gegebenenfalls wie die Greifer beweglich sind. Durch die aus [2] bekannte Einlegehilfe wird lediglich ein Arbeiten von Werkern in der unmittelbaren Umgebung des heißen Formwerkzeuges entbehrlich gemacht, was sowohl aufgrund der Wärme als auch aufgrund der schlechten Zugänglichkeit des Formwerkzeuges ergonomisch äußerst ungünstig wäre. In jedem Fall setzt die Handhabungsvorrichtung voraus, daß der einzulegende Mattenstapel ihr zuvor an einer bestimmten Aufnahmestelle in der Nähe des Unterwerkzeuges lagedefiniert bereitgelegt worden ist. Dies ist jedoch bei automatisierter Fertigung seinerseits durchaus problematisch und durch die bekannte Einlegehilfe keineswegs gelöst. Aber selbst wenn eine positionsgenaue Bereitstellung des Harzmattenstapels auf einem Übergabetisch unterstellt werden könnte, so stellt sich auch bei einem randseitigen Ergreifen der Harzmatten in Abhängigkeit von der mehr oder weniger großen Weichheit der Harzmatten schwerkraftbedingt ein mehr oder weniger großer Durchhang der Harzmatten ein. In Abhängigkeit von der Größe des Durchhanges der Harzmatten ist deren erster Aufsetzpunkt auf der Gravur des Unterwerkzeuges unterschiedlich gelegen. Die Position dieses ersten Aufsetzpunktes bestimmt jedoch die spätere Endposition des ganzen Harzmattenstapels, weil nach dem anfänglichen punktuellen Aufsetzen der Harzmatten auf der Gravur eine Relativverschiebung der Harzmatten nicht mehr stattfindet. Beim Absenken der Durchhängenden Harzmatten auf der Gravur rollen die Harzmatten auf der Werkzeugoberfläche ab, bleiben aber im übrigen an der Oberfläche haften.

Die US-PS 4 576 560 = [4] befaßt sich ebenfalls mit dem automatisierten Einlegen von Harzmatten in das geöffnete Formwerkzeug einer SMC-Teile-Presse. Und zwar wird in [4] ein Nadelgreifer mit mehreren zur Schwerkraftrichtung räumlich geneigt angeordnete Nadeln vorgeschlagen, die beim Aufnehmen der Harzmatten teleskopartig ausgefahren und beim Ablegen wieder zurückgezogen werden können. Mit den Greifernadeln ist ein axial verschiebbarer Abstreifer verbunden, der unabhängig von der Nadel verschoben werden kann. Die Nadeln sind in der Weise räumschräg geneigt angeordnet, daß der Winkel zwischen Nadel und Harzmatte sich beim girlandenartigen Durchhängen derselben in Richtung zu einem rechten Winkel vergrößert, wobei allerdings die Nadeln selber in ihrer raumschrägen Anordnung unbeweglich gehaltert sind. Der Nadelgreifer arbeitet mit einem dem Unterwerkzeug grob angepaßten Ablage- bzw. Aufnahmetisch zusammen, der an den Einstichstellen der Nadeln Aussparungen besitzt, so daß die Greifernadeln behinderungsfrei durch die aufzunehmende Matten hindurchstechen können. Auch bei der aus [4] bekannten Handhabungseinrichtung handelt es sich - ähnlich wie bei [2] - lediglich um eine Umsetzvorrichtung, die voraussetzt, daß der einzulegende Mattenstapel ihr zuvor an einer bestimmten Aufnahmestelle in der Nähe des Unterwerkzeuges lagedefiniert bereitgelegt worden ist. In sofern ist auch gegenüber [4] die gleiche Kritik wie gegenüber [2] anzubringen. Es kommt bei dem Nadelgreifer gemäß [4] hinzu, daß die Einstichstellen der Nadeln in Abhängigkeit von der lokal oder zeitlich streuenden Weichheit und/oder dem Fasergehalt sich beim Anheben und Transportieren der Harzmatte schwerkraftbedingt mehr oder weniger stark ausdehnen. Auch die mehr oder weniger stark aufgeweitete Einstich der Haltenadeln führen also ebenfalls eine unterschiedliche Streulage des Durchanges der aufgenommenen Harzmatte herbei. Außerdem streut die Lage der Einstichstellen in Abhängigkeit von der Härte der aufzunehmenden Harzmatte und/oder in Abhängigkeit von der Sauberkeit der Nadeln. Diese durch die Bauart des Greifers bedingte Lagestreuung des Durchhanges wird der im Zusammenhang mit [2] bereits beschriebenen härteabhängigen Größenstreuung des Durchhanges überlagert.

In der EP 461 365 B1 = [5] wird ein Verfahren zur Herstellung von Kunststoffpreßteilen aus thermoplastischem Kunststoff gezeigt, bei dem eine gewichtsmäßig abgestimmte Menge an erwärmten und erweichtem Thermoplast-Kunststoff in ein geöffnetes Formwerkzeug einer Presse eingelegt, durch Schließen des Formwerkzeugs die Kunststoffmasse in die Kavität des Formwerkzeugs fließgepreßt und anschließend das noch im Formwerkzeug befindliche Werkstück abgekühlt und schließlich aus ihm entnommen wird. Zum Entnehmen des fertigen Werkstücks aus dem geöffneten Preßform-Werkzeug wird ein von einem dreiachsig beweglichen Manipulator gehandhabter Sauggreifer mit zwei Saugnäpfen je Werkstück verwendet. Zwar geht [5] nicht näher auf die Ausgestaltung der Saugnäpfe ein, jedoch kann gesagt werden, daß bei Sauggreifern üblicherweise anpassungsfähige Saugnäpfe aus weichelastischem Werkstoff verwendet werden, bei denen der Saugnapfrand als eine im Querschnitt dünne Dichtlippe ausgebildet ist, die sich schirmartig nach unten öffnet und die sich an Oberflächenunebenheiten gut anschmiegen und deswegen gut abdichten kann. Nachteilig an Sauggreifern beim Handhaben von reaktionsfähigen und klebrigen Harzmatten der SMC-Teile-Fertigung ist jedoch, daß sie zur Verschmutzung neigen und somit als störanfällig abzulehnen sind, worauf in der weiter oben im Zusammenhang mit der Würdigung der Literaturstelle [1] mit erwähnten Druckschrift [3] zu Recht hingewiesen wird. In der EP 1 099 538 wird ein Verfahren zum Transfer und Positionieren von Endlosfaser-Bändern mit Vakuumgreifer gezeigt.

Ausgehend vom geschilderten Stand der Technik besteht die Aufgabe der Erfindung darin, ein verbessertes Verfahren bzw. eine Vorrichtung zum Handhaben von Harzmattenzuschnitten aufzuzeigen, mit der beliebig geformte Zuschnitte von einer flachen, unterbrechungsfreien Unterlage aufgenommen und mit der alle bei der SMC-Teile-Fertigung üblicherweise vorkommenden Handhabungsvorgänge sowohl bezüglich Einzelzuschnitten als auch bezüglich Mattenstapeln störungsfrei und bei hoher Arbeitsgenauigkeit automatisiert durchgeführt werden können. Insbesondere sollen etwaige Schwankungen der Härte bzw. Weichheit der Harzmatten sich in keiner Weise auf die Positioniergenauigkeit der Harzmatten beim Aufnehmen oder Ablegen derselben auswirken können.

Ausgehend von dem geschilderten Stand der Technik wird diese Aufgabe bezüglich des verfahrensmäßigen Aspektes erfindungsgemäß durch die Gesamtheit der Merkmale von Anspruch 1 und bezüglich der Vorrichtung durch die Gesamtheit der Merkmale von Anspruch 8 gelöst.

Danach werden die nach Form und Größe u.U. unterschiedlichen Harzmatten durch einen mehrachsig manipulierbaren Sauggreifer automatisiert gehandhabt und oberseitig an mehreren Stellen gleichzeitig festgehalten. Die zahlreich und in einem Raster unterseitig am Sauggreifer in einer Saugglockenebene angebrachten, aus einem unnachgiebigen Werkstoff bestehenden Saugglocken sind jeweils einzeln ansteuerbar und mit Vakuum beaufschlagbar. Das zu handhabende Gut wird im Prinzip an der gesamten, oberseitigen Oberfläche im ebenen Zustand festgehalten und behält diese ebene Form während des Aufnehmens, des Transportes und während des Ablegens unabhängig von einem mehr oder weniger weichen Zustand der Harzmatten bei. Die Saugglocken weisen einen Tassenquerschnitt mit spitz zulaufendem Rand auf, der sich dichtend in die Mattenoberfläche eingraben kann. Aufgrund der Rasteranordnung der vielen einzeln ansteuerbaren Saugglocken kann der Sauggreifer durch bloße steuerungstechnische Maßmahmen an unterschiedliche Größen und/oder Formen von Mattenzuschnitten angepaßt werden. Dank der unnachgiebigen Tassenform wird nicht nur eine höhere Haltekraft im Vergleich zu einem nachgiebigem Gummigsaugnappf gleicher Größe erreicht, sondern es kann auch ein höheres Vakuum angesetzt werden, ohne die Saugglocke zu deformieren. Aufgrund der sich in die Mattenoberfläche eingrabenden Glocken-Ringschneide dichtet diese sehr gut ab, was ebenfalls ein hohes Vakuum und eine hohe Haltekraft ermöglicht. Trotz einer welligen und/oder mit oberflächlichen Poren versehenen Oberfläche wird selbst im evakuierten Zustand keine Falschluft in die Saugglocken eingeschnüffelt, so daß die aus Höhe des Vakuums und lichter Querschnittsfläche der Saugglocke sich ergebende, rechnerische Haltekraft gegebenenfalls auch tatsächlich wirksam werden kann im gegensatz zu bekannten Saugnäpfen, die bei Einsatz an Werkstücken mit unebener Oberfläche stets eine gewisse Falschluftmenge einsaugen, die die wirksame Haltekraft gegenüber dem rechnerisch möglichen Wert stark reduziert. Die formstabilen Saugglocken sind zum einen aufgrund ihrer schmalen Kontaktfläche zu den Harzmatten wenig verschmutzungsanfällig und sind zum anderen wegen der exponierten Lage und stabilen Form der Kontaktfläche reinigungsfreundlich gestaltet. Die Saugglocken können daher durch drehantreibare, im Aktionsbereich der Handhabungseinrichtung angeordnete Reinigungsbürsten mechanisch gut wieder gereinigt werden, indem der Sauggreifer die Ränder der Saugglocken mit den Reinigungsbürsten in Kontakt bringt.

Zweckmäßige Ausgestaltungen der Erfindung können den Unteransprüchen entnommen werden; im übrigen ist die Erfindung anhand zeichnerisch dargestellter Ausführungsbeispiele nachfolgend noch erläutert; dabei zeigen:
- Fig. 1: eine schematische Gesamtansicht einer Verfahrensanlage in einer Grundrißdarstellung,
- Fig. 2: den Schneidetisch mit dem Linienriß auf einer Harz- mattenbahn für das Zuschneiden der Teile eines siebenteiligen Harzmattenstapels,
- Fig. 3: eine auf einer Waage aufgebaute Vorrichtung zum Vorformen und Wiegen des Basis-Zuschnitteils und zum bereitlegen eines nach Figur 2 gewonnenen Harzmattenstapels,

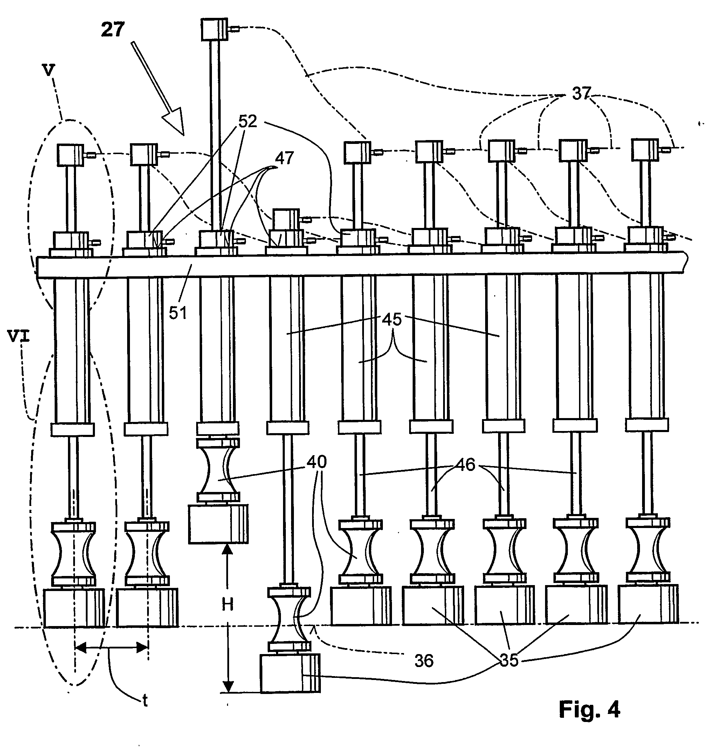

- Fig. 4: eine Seitenansicht von einem universell und flexibel einsetzbaren Sauggreifer mit einer Vielzahl hubbeweglicher Saugglocken,
- Fig. 5 und 6: zwei vergrößert dargestellte Einzelheiten V bzw. VI aus Figur 4,
- Fig. 7: eine Ansicht auf die Unterseite des Sauggreifers nach Figur 4,
- Fig. 8: den Vorgang des Aufnehmen eines ganzen Stapels von Harzmatten unter sichernder Zuhilfenahme von schräg eingestochenen Fixierdorne,
- Fig. 9: eine Ansicht auf den Vorgang des Reinigens der Saugglocken an einer rasterförmig angeordneten Schar von drehangetriebenen, profilierten Reinigungsbürsten,
- Fig. 10a und 10b: zwei Phasen beim Aufnehmen eines einzelnen Harzmattenzuschnittes mit dem Sauggreifer von einer flachen Unterlage,
- Fig. 11a bis 11d: vier Phasen beim Ablegen des Harzmattenzuschnittes auf eine gestufte Unterlage ohne Umgreifen durch den Sauggreifer und
- Fig. 12a bis 12e: fünf Phasen ebenfalls beim Ablegen des Harzmattenzuschnittes auf eine gestufte Unterlage, wobei der Sauggreifer allerdings den Zuschnitt zunächst nur an der oberen Stufe lagegenau und an der unteren Stufe seitenversetzt ablegt (Figur 12c), danach umgreift und unter Zuhilfenahme eines am Sauggreifer angebrachten, leistenförmiges Einformungswerkzeuges den Zuschnitt auch auf der unteren Stufe lagegenau ablegt (Figuren 12d und 12e).

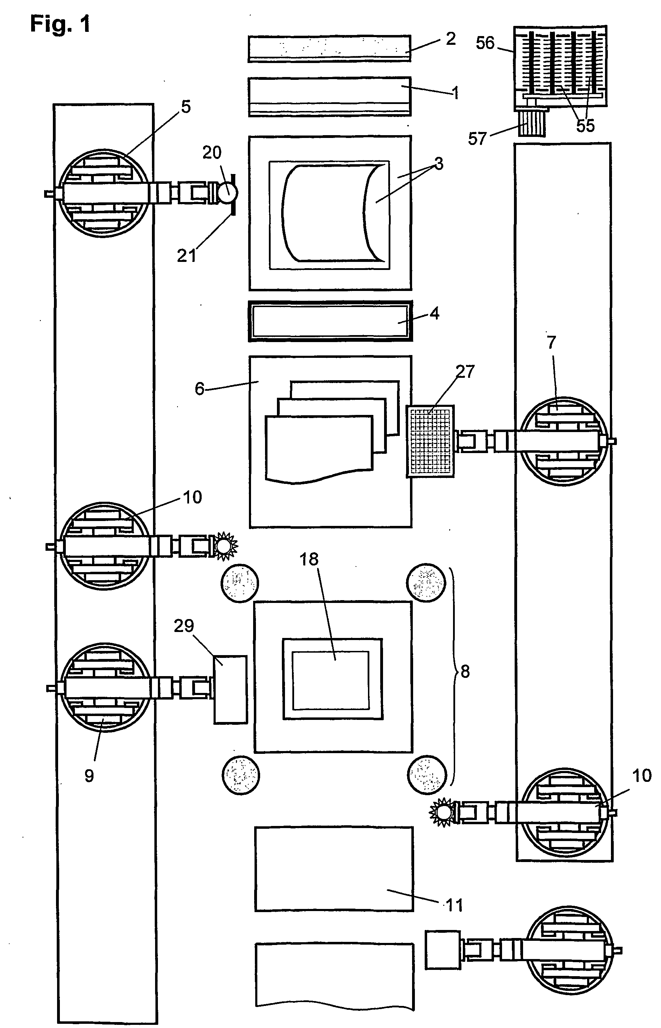

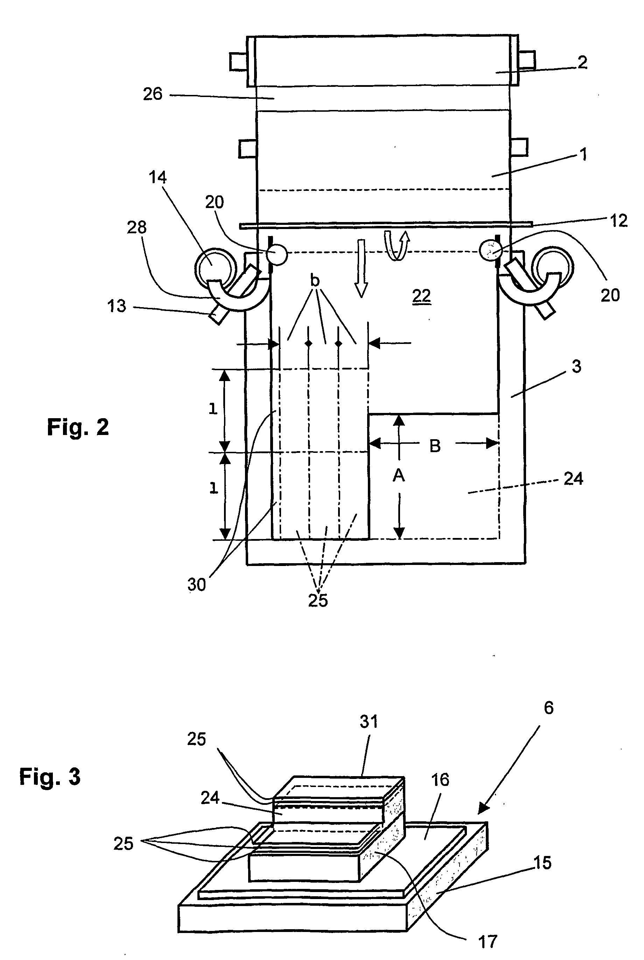

Das der Erfindung zugrunde liegende bzw. vorausgehende Verfahren zum serienmäßigen Herstellen von SMC-Teilen sei kurz an Hand des Verfahrensschemas nach den Figuren 1 und 2 erläutert. Die SMC-Teile werden aus faserhaltiger, reaktionsfähiger Harzmasse hergestellt, die in Form einer quasi-endlosen, zu einer Vorratsrolle 1 aufgewickelten Harzmattenbahn 22 als Vorprodukt bereitgestellt wird. Zur Aufrechterhaltung der Reaktionsfähigkeit des Kunstharzes in der Harzmattenbahn 22 ist diese mit einer Schutzfolie 26 abgedeckt, die erst kurz vor der Verarbeitung der Harzmatte abgezogen und zu einem gesonderten Wickel 2 aufgerollt wird. Wie in Figur 2 deutlicher zu erkennen ist, wird die Schutzfolie über eine in der Nähe des Zuschneidetischs 3 befindliche Wendestange 12 entgegen der Verarbeitungsrichtung der Harzmatte zu dem Wickel 2 umgelenkt. Die Seitenränder der Harzmattenbahn sind für eine Weiterverarbeitung ungeeignet und müssen durch ein Schneidwerkzeug 20 abgeschnitten werden. Die am Bahnrand abgeschnittenen, seitlichen Abfallstreifen 28 werden ebenfalls über Wendestangen 13 in Abfallbehälter 14 umgelenkt.

Auf dem mit einer sehr harten Auflage versehenen Zuschneidetisch 3 wird der brauchbare Teil der Harzmattenbahn 22 zerlegt, wobei aus ihr verschiedene Zuschnitteile definierter Form und Größe herausgeschnittenen und diese zu einem mehrlagigen Harzmattenstapel bestimmter Lagenzahl und Lagenanordnung aufgestapelt werden. Die dabei anfallenden Verschnitteile, die nicht weiter verwendet werden können, werden in einen entsprechenden Abfallbehälter 4 abgeführt. Das Zuschneiden kann grundsätzlich manuell mit einem Scharfen Messer und Stahllineal erfolgen. Bei dem in den Figuren dargestellten Ausführungsbeispiel ist jedoch ein mechanisiertes und automatisiertes Zuschneiden mittels eines Zuschneideroboters 5 vorgesehen.

Auf einem gesonderten Wiege- und Stapelbildungsvorrichtung 6 - siehe auch Figur 3 - werden die durch den Roboter 5 auf dem Tisch 3 geschnittenen Zuschnitteile zu einem Harzmattenstapel 31 aufgestapelt, wobei die Zuschnitteile durch einen Handhabungsroboter 7 gehandhabt und bewegt werden, der seinerseits mit einem speziell für diese Aufgabe und dieses Substrat ausgebildeten Harzmattengreifer 27 ausgerüstet ist, auf den weiter unten näher eingegangen werden soll. Nachdem der Harzmattenstapel 31 in gehöriger Form für ein neues Werkstück gebildet worden ist, wird dieser durch den Handhabungsroboter lagedefiniert in ein beheiztes Formwerkzeug 18 der Formpresse 8 eingelegt.

Durch die Presse wird das Formwerkzeug 18 bis zum Kontakt der formgebenden Oberfläche der Kavität mit dem eingelegten Harzmattenstapel geschlossen und mit definierter, zunächst noch geringer Kraft im Schließsinn gespannt. Durch den Kontakt mit dem heißen Werkzeug erwärmt sich die Harzmasse und erweicht dadurch. Aufgrund der Schließkraft des Formwerkzeuges beginnt die Harzmasse zu fließen und füllt dadurch die Kavität des sich mehr und mehr schließenden Formgebungswerkzeuges 18 schließlich vollständig aus. Das Werkzeug wird anschließend mit erhöhter Kraft eine gewisse Zeit lang im Schließzustand gehalten, wobei die Harzmasse thermisch aushärtet. Nach Ablauf dieser Aushärtungszeit öffnet die Presse 8 das Werkzeug, wobei das fertige SMC-Teil in der Regel in der unteren, ortsfesten Werkzeughälfte liegen bleibt. Durch einen mit einem Entnahmewerkzeug 29 versehenen Entnahmeroboter 9 kann das SMC-Teil aus der Presse entnommen und in einer Abkühlstation 11 abgelegt werden. Während die Zuschneide- und Handhabungsroboter 5 bzw. 7 einen neuen Harzmattenstapel vorbereiten, wird das geöffnete Formwerkzeug 18 durch zwei Reinigungsroboter 10 gereinigt, so daß es zur Aufnahme eines neuen Harzmattenstapels bereit ist.

Um beliebig geformte und/oder angeordnete, insbesondere unterschiedlich große Zuschnitteile aus der Harzmattenbahn 22 automatisiert und störungsfrei zuschneiden zu können, wird als Schneidwerkzeug ein hochfrequent drehoszillierendes Sägeblatt 21 empfohlen, welches - abgetrieben durch ein Elektrowerkzeug 20 mit einem integrierten Oszillationsgetriebe - um eine ortsfeste Mittelstellung herum kleine Drehhübe ausführt. Während des Zuschneidens ist die Harzmattenbahn 22 durch eine glatte, durchgehende sowie stoß- und fugenfreie Unterlage in Form einer dicken Glasplatte 23 unterstützt, die härter als die Schneidezähne des Sägeblattes ist.

Ein wesentliches Problem beim serienmäßigen Herstellen von SMC-Teilen besteht in einem raschen und genauen, vor allem aber automatisierbaren Handhaben der Harzmattenzuschnitte. Dabei sollen beliebig geformte Zuschnitte von einer flachen, unterbrechungsfreien Unterlage aufgenommen und alle bei der SMC-Teile-Fertigung üblicherweise vorkommenden Handhabungsvorgänge sowohl bezüglich Einzelzuschnitten als auch bezüglich Mattenstapeln störungsfrei und bei hoher Arbeitsgenauigkeit automatisiert durchgeführt werden können.

In diesem Zusammenhang sei daran erinnert, daß zur Erreichung des vorgeschriebenen Sollgewichts der in das Formwerkzeug einzugebenden Harzmasse zumindest einige Zuschnitteile mit unterschiedlicher Fläche aus der im Flächengewicht schwankenden Harzmattenbahn 22 herausgeschnitten werden müssen. Das Handhaben der flächenvariabel zugeschnittenen und lokal unterschiedlich auf dem Zuschneidetisch 3 positionierten Zuschnitteile 25 kann weitere Handhabungsprobleme beim Zusammenstellen der Harzmattenstapel verursachen.

Bei dem in Figur 2 dargestellten Ausführungsbeispiel wird ein Harzmattenstapel aus insgesamt sieben Zuschnitteilen gebildet, nämlich aus einem besonders großen Basis-Zuschnitteil 24 und aus sechs wesentlich kleineren, übrigen Zuschnitteilen 25, die in zwei kleinen, nebeneinander liegenden Stapeln auf dem zuunterst liegenden Basis-Zuschnitteil 24 aufgestapelt werden. Das Basis-Zuschnittteil wird stets flächengleich mit den konstanten Seitenmaßen A x B zugeschnitten, dann gewogen und aus dem Gewicht auf das Flächengewicht der Harzmattenbahn geschlossen. Unter der Annahme, daß das Flächengewicht in der unmittelbaren Nachbarschaft des Basis-Zuschnittteils praktisch unverändert ist, werden nach einem bestimmten Algorithmus die übrigen Zuschnitteilen 25 flächenvariabel aber gezielt im Hinblick auf ein gleichbleibendes Gesamtgewicht zugeschnitten. Zwar wird das Längenmaß 1 der übrigen Zuschnitteile 25 im dargestellten Beispiel für alle Werkstücke konstant beibehalten, aber das Breitenmaß b wird individuell zur Gewichtsanpassung variiert; dabei ist das Breitenmaß in dem dargestellten Beispiel für alle sechs Zuschnitteile 25 eines Harzmattenstapels untereinander gleich. Am linken Seitenrand ergibt sich je nach lokalem Flächengewicht der Harzmattenbahn 22 ein mehr oder weniger breiter Verschnittstreifen 30.

Es kommt hinzu, daß der in Figur 2 erkennbare Platzbedarf für die dort gezeigten sieben Zuschnitteile 24 und 25 sich nicht gleichmäßig über die Breite der Harzmattenbahn 22 verteilen läßt. Im Bereich des Basis-Zuschnitteils 24 wird in Bahnlängsrichtung lediglich ein Material vom Maß A, hingegen auf der gegenüberliegend Bahnseite Material vom wesentlich größeren Maß 2·1 verbraucht. Zum Ausgleich ist es zweckmäßig, beim nächstfolgenden Zuschnitt die Anordnung von Basis-Zuschnitteil 24 und den übrigen Zuschnitteilen 25 seitenmäßig zu vertauschen, so daß sich rechts und links ein gleichmäßiger Verbrauch an Harzmatte ergibt. Auch was also die Verteilung der Zuschnitteile auf der Harzmattenbahn anbelangt, ist ein flexibles Zuschneiden und Handhaben der Harzmatte erforderlich. Außerdem müssen die Teile von einer flachen und fugenfreien Unterlage aufgenommen werden.

Bei dem in Figur 3 dargestellten Ausführungsbeispiel wird das Referenz-Zuschnitteil 24 beim Ablegen auf die Waage 15 nicht nur gewogen, sondern zugleich auch gestuft vorgeformt, wie es später für das Einlegen des fertig gebildeten Harzmattenstapels 31 in das Formwerkzeug zweckmäßig ist. Es sei hervorgehoben, daß es sich hierbei um einen Sonderfall eines diesbezüglich kritischen Werkstückes handelt, welches vorliegend aber ausgewählt wurde, um das Spektrum der Handhabungsmöglichkeiten des erfindungsgemäßen Sauggreifers in seiner vollen breite aufzeigen zu können. Zum Zweck eines gestuften Vorformens der Harzmatte 24 also ist auf der Wiegeplatte 16 der Waage eine Stapelvorrichtung 17 befestigt, die ein gestuftes Vorformen des Referenz-Zuschnitteils durch den Handhabungsroboter 7 und den Harzmattengreifer 27 ermöglicht. Die übrigen Zuschnitteile 25 werden auf der unteren bzw. oberen Stufe des Basis-Zuschnitteils 24 aufgestapelt. Auch dies stellt hohe Anforderungen an die Handhabungsvorrichtung.

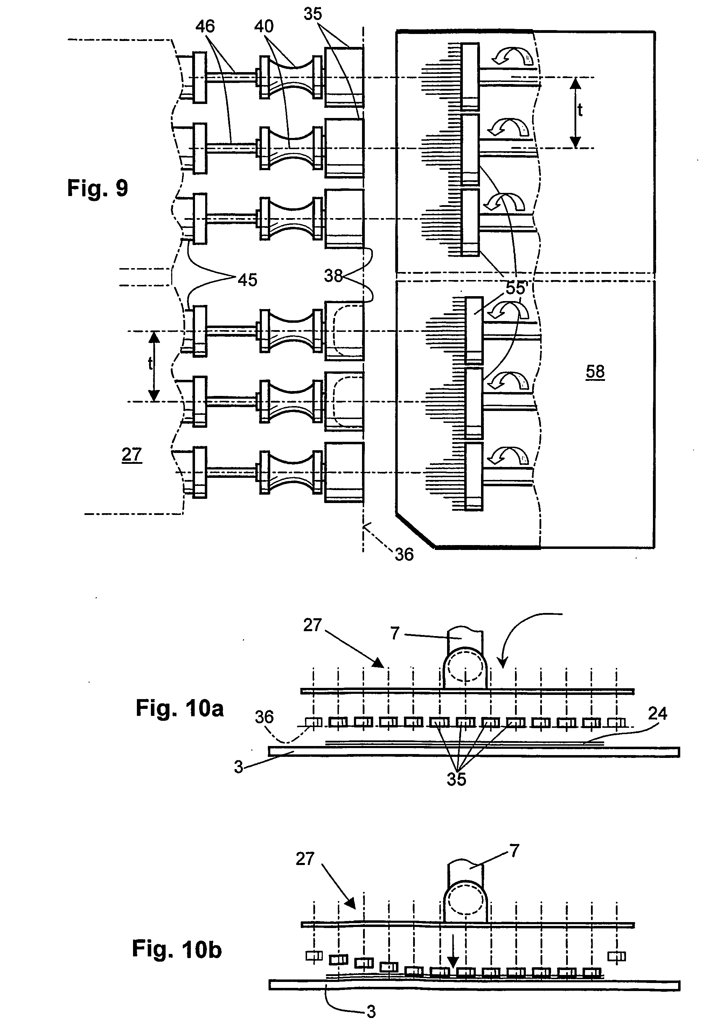

Zum automatisierten Handhaben der Harzmattenzuschnitte unterschiedlicher Form und Größe ist erfindungsgemäß ein durch einen mehrachsig beweglichen Handhabungsroboter 7 manipulierbarer Sauggreifer 27 vorgesehen, der wie nachfolgend beschrieben ausgebildet ist: Um die Harzmatten gleichzeitig an mehreren Stellen oberseitig erfassen zu können, sind am Sauggreifer 27 unterseitig viele Saugglocken 35 angeordnet, die mit ihrer offenen Seite nach unten weisen und mit ihrem Rand 38 gemeinschaftlich in einer Saugglockenebene 36 liegen bzw. gebracht werden können. Die Saugglocken sind über eine Fläche, die der größten zu handhabenden Harzmatte entspricht, rasterartig verteilt. Der gegenseitige Querabstand t der Saugglocken 35 innerhalb des Rasters ist derart bemessen, daß die kleinste zu handhabende Harzmatte wenigstens noch zwei Saugglocken 35 abdeckt. Jede Saugglocke 35 ist jeweils einzeln über einen separaten Anschluß 37 ansteuerbar und mit Vakuum beaufschlagbar. Die aus einem unnachgiebigen Werkstoff bestehenden Saugglocken weisen einen im Querschnitt nach Art einer Ringschneide spitz zulaufenden Rand 38 und im randnahen Bereich eine annähernd zylindrische Innen- und Außenfläche auf. Außerdem ist jede Saugglocke orthogonal zur Saugglockenebene 36 axialbeweglich, d.h. hubbeweglich geführt und kann auf einen jeweiligen Steuerbefehl hin jeweils für sich aus einer Ruheposition sehr rasch in eine axial dazu versetzt liegende Aufnahmeposition verschoben werden, worauf weiter unten im Zusammenhang mit den Figuren 10a, b; 11a, b, c, d; und 12a bis 12e näher eingegangen werden soll. Die axialbewegliche Führung der Saugglocken ist bei dem in den Zeichnungen dargestellten Ausführungsbeispiel dadurch gelöst, daß jede Saugglocke mit der Kolbenstange 46 eines jeweils für sich ansteuerbaren, pneumatischen Arbeitszylinders 45 verbunden ist.

Der Vollständigkeit halber sei an dieser Stelle erwähnt, daß bei einer Einfachversion des Sauggreifers anstelle der Führung der Saugglocken durch Kolbenstangen je eines pneumatischen Arbeitszylinders auch eine einfache Stangenführung möglich wäre, wobei die Saugglocke durch eine vorgespannte Feder aus einer verriegelten Ruheposition in Richtung auf die Arbeitsposition beschleunigt wird. Durch jeweils einen einzeln ansteuerbaren Elektomagnet kann die Verriegelung für einzelne Saugglocken gelöst und so der rasche Übergang der aktivierten Saugglocken in die Arbeitsposition ausgelöst werden. Das Zurückfahren der Saugglocken in die verriegelte Ruheposition könnte dadurch herbeigeführt werden, daß der Sauggreifer durch den Handhabungsroboter mit den Saugglocken auf eine flache Unterlage gedrückt wird, wodurch alle Saugglocken gemeinsam in ihre Ruhepodsitionen zurückgedrängt werden, wo die Verriegelungen selbsttätig einfallen.

Die Saugglocken bestehen - wie gesagt - aus einem unnachgiebigen Werkstoff, z.B. aus rostfreiem Stahl, aus Messing, Aluminium oder auch aus einem sich gegenüber dem Material der Harzmattenbahnen inert verhaltenden Hartkunststoff. Aufgrund der genannten Werkstoffe geben die Saugglocken unter Vakuum nicht nach, sondern behalten auch unter anderweitiger Krafteinwirkung ihre Form bei. Wegen eines möglichen Verschleißes der Saugglocken beim serienmäßigen Einsatz des Sauggreifers aufgrund ständig wiederkehrender Bürstenreinigung insbesondere des schneidenartigen Randes der Saugglocken ist ein verschleißfester Werkstoff, also vor allem Stahl, zumindesr im Randbereich 38 zu bevorzugen.

Um eine vakuumbeständige Abdichtung der harten Saugglocke an der Harzmattenbahn gewährleisten zu können, ist der Rand 38 der Saugglocke nach Art einer Ringschneide im Querschnitt V-förmig spitz zulaufend ausgebildet, wobei die vorderste Kante der Ringschneide allerdings geringfügig verrundet sein sollte, um eine Gefahr von Faserverletzungen zu vermeiden. Aufgrund des V-förmigen Querschnitts drückt sich der Rand in die Oberfläche der Harzmatte ein, insbesondere dann, wenn die Saugglocke beim Aufsetzen mit einer gewissen Geschwindigkeit auf die Harzmatte aufgeschlagen wird und vor allem auch dann, wenn die erforderlichen Saugglocken nicht alle gleichzeitig, sondern bei geringem Zeitversatz aufgesetzt werden. Zwar wird dieses Eingraben durch die spätere Vakuumbeaufschlagung der Saugglocke verstärkt, aber es muß bereits anfänglich eine gewisse Abdichtung der Saugglocke gegenüber der Harzmatte gewährleistet sein, die einen sicheren Vakuumaufbau in der Saugglocke erlaubt.

Die Aufsetzkraft der Saugglocken 35 auf eine aufzunehmende Harzmatte und die Einfurchtiefe des Randes darin muß fallweise empirisch ermittelt werden. Bei weichen und/oder sehr ebenen Harzmatten mag ein Druck von beispielsweise 2 bar in den Pneumatikzylindern ausreichen, um in jedem Fall eine gute Abdichtung erreichen zu können. Bei härteren und/oder unebenen Harzmatten kann die u.U. nur durch einen höheren Arbeitsdruck erreicht werden.

Durch den wiederholten und innigen Kontakt der Saugglocken 35 mit den klebrigen Harzmatten besteht trotz der geringen Kontaktfläche die Gefahr einer Verschmutzung der Saugglocken. Anhaftende Kunststoffreste härten mit der Zeit aus und beeinträchtigen die Dichtheit der aufgesetzten Saugglocken.

Um die Verschmutzungsmöglichkeit allein durch die Formgebung zu minimieren, sind die Saugglocken zumindest im randnahen Bereich innen und außen annähernd zylindrisch gestaltet. Um gleichwohl ein Anreichern von Kunstharz an den Saugglocken zu verhindern, ist im Aktionsbereich des Handhabungsroboters 7 eine Schar von drehantreibaren Reinigungsbürsten 55 angeordnet, die bei dem in Figur 1 dargestellten Ausführungsbeispiel walzenförmig ausgebildet sind. Die am oberen Rand eines Behälters 56 horizontal angeordneten Reinigungsbürsten werden durch einen Antrieb 57 angetrieben. Zum Reinigen der Saugglocken wird der Sauggreifer 27 über den Umfang der Reinigungsbürsten hin- und herbewegt, wobei anhaftender Kunststoff von den Rändern 38 der Saugglocken abgestreift und in dem Behälter 56 aufgefangen wird. Erforderlichenfalls kann der Sauggreifer mit unterschiedlicher Ausrichtung des Saugglockenfeldes - längs, quer, diagonal - zur Umfangsrichtung der Walzenbürsten über diese hinweggestreift werden. Außer rein walzenförmigen Reinigungsbürsten sind auch profilierte Reinigungsbürsten denkbar, bei denen die Einhüllende über den Borstenenden beispielsweise das Profil eines Zahnrades aufweist. Hierbei kann es zweckmäßig sein, wenn die profile schraubengangartig geneigt zur Axialrichtung verlaufen. Auch Noppenprofile der Einhüllenden über den Borstenenden können gegenüber einer zylindrischen Bürste u.U. ein verbessertes Reinigungsergebnis bringen.

Damit sich die durch die Bürsten von den Saugglocken abgestreiften Partikel schwerkraftbedingt in dem die Reinigungsbürsten umgebenden Behälter 56 sammeln können, sind die Reinigungsbürsten 55 bei dem in Figur 1 dargestellten Ausführungsbeispiel im Bereich des oberen Randes der Behälter horizontal gelagert. Hierbei ist hervorzuheben, daß die Reinigungsbürsten leicht austauschbar in dem Behältern gehaltert sein sollten, um sie im Falle einer Verschmutzung der Bürsten selber rasch gegen neue oder saubere Bürsten austauschen zu können. Ein etwaiges Reinigen der Bürsten kann erforderlichen- oder möglichenfalls in einer gesonderten Wartungswerkstatt durchgeführt werden. Erste Erfahrungen mit dem Reinigungssystem deuten darauf hin, daß die Borsten der Reinigungsbürsten sehr hart und steif sein müssen, um einen zuverlässigen Reinigungseffekt erzielen zu können.

Um auch das Innere der Saugglocken reinigungsgüstig zu gestalten, ist der von einer Saugglocke 35 oberhalb des Randes 38 eingeschlossene rotationssymmetrische Innenraum relativ flach gestaltet. Der Innenraum weist eine axiale Höhe h von etwa 25 bis 40 % des Randdurchmessers d auf. Außerdem geht der oberseitige Boden 39 des von der Saugglocke 35 umschlossenen Innenraumes verrundet in den Umfang über und weist selber eine Oberflächenform ähnlich ein Rotationsellipsoid nach Art eines Kesselbodens auf. Zu flach darf der Glockeninnenraum nicht sein, weil sonst Gefahr besteht, daß die unter Vakuumeinfluß sich in das Innere der Saugglocke hineinwölbende Harzmatte den Glockenboden 39 berührt. Durch diesen Kontakt könnte der Glockenboden nicht nur unnötig mit Harz verunreinigt werden, sondern es könnte die Fläche, auf der das Vakuum wirksam ist, gegenüber der vom Glockenrand 38 eingeschlossenen Kreisfläche verringert werden.

Um an jeder Saugglocke unter Vakuumeinfluß eine gewisse Mindestkraft aufbauen zu können, darf sie nicht zu klein sein. Deshalb wird empfohlen, den Durchmesser d einer jeden Saugglocke 35 an ihrem Rand 38 auf etwa 2,5 bis 10 cm, vorzugsweise etwa 3 bis 4 cm zu bemessen, was einer eingeschlossenen Fläche von gerundet 5 bis 78 cm², vorzugsweise etwa 7 bis 12 cm² entspricht. Die größeren Saugglocken sind bei stärkeren und/oder biegesteiferen Harzmatten zu bevorzugen. Durch Anlegen eines Vakuums von 0,7 bar (das ist ein mäßiger Wert) kann dann eine Haltekraft je Saugglocke von etwa 15 bis 230 N, vorzugsweise etwa 21 bis 35 N aufgebaut werden; bei 0,5 bar wären es 25 bis 390 N, vorzugsweise etwa 35 bis 60 N. Unter Berücksichtigung der o.g. flachen und reinigungsgünstigen Gestaltung des Innenraumes der Saugglocke sollte das lichte Volumen einer jeden Saugglocke zweckmäßigerweise etwa 3 bis 300 cm³, vorzugsweise etwa 5 bis 20 cm³ betragen. Diese Volumina sind sehr rasch evakuierbar.

Mit Rücksicht auf eine möglichst flache, d.h. durchhangarme Aufnahme der Harzmatten wird ein geringer gegenseitiger Querabstand der Saugglocken innerhalb der rasterartigen Verteilung der Saugglocken angestrebt. In einem hexagonal gestalteten Raster lassen sich je Flächeneinheit besonders viele Saugglocken unterbringen. Aus Fertigungsgründen ist jedoch ein einfacher gestaltetes orthogonales Raster zu bevorzugen. Die orthogonale Grundstruktur des Rasters ist auch mit Rücksicht darauf von Vorteil, daß zwischen den einzelnen Reihen von hubbeweglich gehalterten Saugglocken jeweils schmale Gassen zur Unterbringung von ausfahrbaren Fixierdorne 64 bis 66 frei gelassen werden müssen, worauf weiter unten noch eingegangen werden soll.

Das Teilungsmaß t des Rasters, welches der flächenmäßigen Verteilung der Saugglocken 35 in der Saugglockenebene 36 zugrunde liegt, braucht in Längs- und Querrichtung nicht gleich groß zu sein, jedoch wird man ein zumindest angenähert gleich großes Teilungsmaß anstreben. Das Teilungsmaß des Rasters kann auch über die Gesamtfläche des Sauggreifers hinweg unterschiedliche Werte annehmen. Beispielsweise kann es zweckmäßig sein, im Zentrum des Sauggreifers bei kleinem Teilungsmaß kleinere Saugglocken anzuordnen um kleine Mattenzuschnitte damit durchhangfrei handhaben zu können. Die im Randbereich des Sauggreifers angeordneten Saugglocken werden jedoch nur zum Handhaben von großen Mattenzuschnitten benötigt. Hier genügt dementsprechend ein größerer Teilungsabstand von größeren Saugglocken. In jedem Fall sollte das Teilungsmaß innerhalb der rastermäßig verteilt angeordneten Saugglocken mindestens etwa 120 bis 150 % des Durchmessers d der Saugglocken 35 betragen.

Damit die Saugglocken 35 sich beim Auflegen der Harzmatten auf die Gravur des Formwerkzeuges an dessen Form anpassen können, ist in der Halterung der Saugglocken jeweils ein elastisches Zwischenglied 40 oberhalb der Saugglocke angebracht, welches auch während des Ablegens der Harzmatten auf die Gravur in gewissem Umfang auf selbsttätige Weise eine elastische Schwenkung der Saugglocke zuläßt. Dieses Zwischenglied 40 besteht bei dem in den Figuren dargestellten Ausführungsbeispiel im Wesentlichen aus einem taillierten, runden Gummiteil, an dem ober- und unterseitig Gewindeplatten befestigt sind. Durch im Gummi integrierte, bewegliche Zugglieder wird sichergestellt, daß das Zwischenglied in Axialrichtung nahezu unnachgiebig ist. Alternativ könnte ein solches Zwischenglied auch durch eine Schraubenfeder oder durch einen Faltenbalg gebildet sein, wobei allerdings durch integrierte, bewegliche Zugglieder eine axiale Unnachgibigeit sichergestellt sein müßte. Dieses elastische Zwischenglied ist sowohl bei einer Sauggreiferbauart mit großem Saugglockenhub H als auch bei einer Einfachbauart mit nur geringem, aufsetzbedingtem Saugglockenhub sinnvoll.

Um die Väkuumzuführung zu den Saugglocken 35 baulich einfach gestalten zu können, und um im Arbeitsbereich der hubbeweglich gehalterten Saugglocken bewegliche Schlauchleitungen zu vermeiden, sind die Kolbenstangen 46 der Hubzylinder und gegebenenfalls die elastischen Zwischenglieder 40 jeweils mit einer axial durch sie hindurch gehenden Bohrung 50, 50' versehen, durch die das Vakuum der jeweils zugehörigen Saugglocke zugeführt werden kann. Die Kolbenstangen 46 sind oberseitig jeweils dichtend durch den Zylinderkopf 54 herausgeführt, wobei die Vakuumanschlüsse 37 für die Saugglocken 35 jeweils an den oberen Kolbenstangenenden angeordnet sind. Von den Kolbenstangenenden führen bewegliche und vakuumfeste Schlauchleitungen zu einer unbeweglich auf dem Sauggreifer angeordneten Sammelleitung. Diese ist über eine auf dem Roboterarm beweglich verlegte Hauptleitung an eine ortsfest in der Fabrikationshalle aufgestellte Vakuumquelle angeschlossen. In diesem Zusammenhang sei erwähnt, daß zur Vakkumerzeugung nicht - wie sonst üblich - Venturidüsen, sondern vorzugsweise volumetrisch wirkende Sauggebläse verwendet werden. Leistungsfähige Sauggebläse aller Bauart erlauben nicht nur ein rasches Evakuieren der Saugglocken, sondern lassen ohne nennenswerte Einbuße an Höhe des Vakuums auch eine gewissen Falschluftmenge an den Saugglocken zu.

Bei dem in den Zeichnungen dargestellten Ausführungsbeispiel ist jede der Saugglocken am freien Ende der Kolbenstange 46 je eines Hubzylinders 45 gehaltert, welche Hubzylinder im Sauggreifer 27 unnachgiebig befestigten sind. Jeder Hubzylinder kann jeweils einzeln über den Anschluß 48 bezüglich des oberseitigen Kolbenraumes, d.h. "Senken", oder über den Anschluß 49 bezüglich des unterseitigen Kolbenraumes, d.h. "Heben", angesteuert und mit Druck beaufschlagt werden. Dadurch kann jede beliebige Auswahl von Saugglocken orthogonal zur Saugglockenebene 36 angehoben oder abgesenkt werden. Es ist auch möglich, die Unterseite der Kolben aller Pneumatikzylinder ständig und einheitlich mit ein und demselben, mäßigen Druck, z.B. mit 1 bar, im Sinne "Heben" zu beaufschlagen, so daß dieser unterseitige Druck wie eine pneumatische Rücklauffeder wirkt. Entsprechend der Länge der Hubzylinder 45 ist ein Maximalhub H zwischen der obersten und der untersten Stellung der Saugglocke möglich. Ein großer Hub der Saugglocken wird für ein stufenförmiges Ablegen der Harzmatten oder für ein Einformen der Harzmatten in das Formwerkzeug 18 benötigt.

Wenn ein großer Glockenhub H nicht erforderlich ist, d.h. wenn die Harzmatten nur aus einem ebenem Zustand aufgenommen und auch in einem annähernd ebenem Zustand abgelegt werden sollen, so genügt ein kleiner Hub der Saugglocken, der groß genug sein sollte, um die fallweise nicht benötigten Saugglocken sicher vor einem Kontakt mit der zu handhabenden Harzmatte zu bewahren. Ein solcher Hub ist auch sinnvoll für eine Beschleunigung der zu aktivierenden Saugglocken aus einer angehobenen Ruheposition heraus, damit diese mit einer gewissen Mindestgeschwindigkeit auf die Harzmatte aufzusetzen können, so daß sich der Glockenrand aufgrund des Auftreff-Impulses in die Mattenoberfläche dichtend einfurchen kann. Bei einer solchen Einfachbauart des Sauggreifers mit geringem Saugglockenhub genügt für einen Kolbenrücklauf jeweils eine im Pneumatikzylinder integrierte Kolbenrückholfeder. Die Arbeitsposition der Saugglocke entspricht bei dieser Sauggreiferbauart stets der voll bis zum Hubende des Kolbens ausgefahrenen Position des Pneumatikzylinders.

Bei dem Sauggreifer handelt es sich um ein Serienwerkzeug, welches fallweise im Hinblick auf den jeweiligen Einsatzfall optimiert wird. Wenn das herzustellende Werkstück im Fertigzustand relativ flach ist, wird man auch einen Sauggreifer mit geringen Saugglockenhub verwenden. Dies hätte neben dem Gewichtsvorteil und der Einfachbauform der Pneumatikzylinder den wesentlichen Vorteil einer geringen Bauhöhe des Sauggreifers insgesamt. Dies ist deshalb von Vorteil, weil bei einem Sauggreifer mit geringer Bauhöhe das Formwerkzeug zur Beschickung mit neuen Harzmatten nur entsprechend wenig geöffnet zu werden braucht. Je weniger das Formwerkzeug geöffnet wird, um so geringer ist die Abkühlung desselben in den für die Neubeschickung erforderlichen Öffnungszeiten und um so schneller hat das Formwerkzeug nach dem Schließen wieder seine Solltemperatur erreicht. Geringe Bauhöhe des Sauggreifers, geringe Öffnungshöhe des Formwerkzeuges beim Neubeschicken, geringe Abkühlung desselben in den Unterbrechungszeiten und kürzere Zykluszeiten hängen also unmittelbar miteinander zusammen.

Mit dem Sauggreifer 27 sollen die Harzmatten nicht nur vom Zuschneidetisch 3 aufgenommen und aufgestapelt werden, sondern die einzulegenden Harzmattenstapel oder Harzmatten sollen auch lagegenau und formentsprechend auf die Gravur des Formwerkzeuges abgelegt werden. Auch zu diesem Zweck ist die Beweglichkeit der Saugglocken 35 über einen größeren Hub H vorgesehen. Die größere Bauhöhe des Sauggreifers und die damit zusammenhängende größere Öffnung des Werkzeuges in den Beschickungspausen muß in Kauf genommen werden.

Um im Falle eines großen Glockenhubes H auch beliebige Zwischenstellungen der Saugglocke ermöglichen bzw. fixieren zu können, ist auf dem oberseitig aus dem Zylinderkopf 54 herausgeführten, frei zugänglichen Teil der Kolbenstange 46 der Hubzylinder 45 jeweils eine ringförmige Kolbenstangenbremse 52 angeordnet, die axial leichtgängig d.h. unter Umständen auch durch sein bloßes Eigengewicht, auf der Kolbenstange verschiebbar ist. Jeder der Kolbenstangenbremsen ist jeweils für sich ansteuerbar und mit einem Steueranschluß 53 versehen. Durch ein Ansteuern kann die Kolbenstangenbremse in der jeweils vorliegenden Relativposition auf der Kolbenstange fixiert werden.

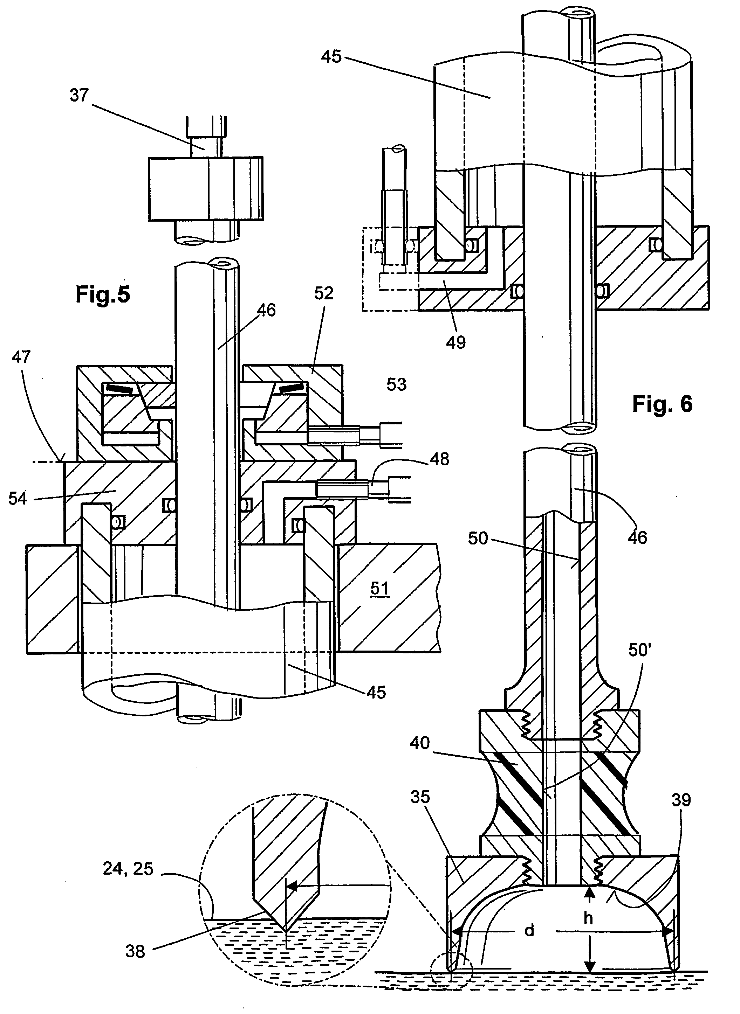

Ohne Ansteuerung der Kolbenstangenbremse 52 liegt diese schwerkraftbedingt lose oder aufgrund einer stirnseitigen Verschraubung an der oberen Stirnseite 47 des Zylinderkopfes 54 an, und zwar unabhängig von der jeweiligen Hubstellung der Kolbenstange 46 bzw. der Saugglocke 35. Bei dem in Figur 5 dargestellten Ausführungsbeispiel ist eine pneumatische Bauart der Kolbenstangenbremse 52 gezeigt. Durch einen unterseitig druckbeaufschlagbaren und gegen die Kraft einer Rückstellfeder verschiebbaren Ringkolben kann über Kegelflächen ein radial geschlitzter Bremskonus radial komprimiert werden, der dadurch kraftschlüssig die Kolbenstange umschließt und diese fixiert. Eine Abwärtsbewegung der Kolbenstange ist dann nicht mehr möglich, weil die an der Kolbenstange festgesetzte Bremse 52 an der oberen Stirnseite 47 des Zylinderkopfes anliegt. Nach Entlastung des Ringkolbens wird dieser durch die Rückstellfeder abgesenkt, so daß der Bremskonus radial wieder auffedern und die Kolbenstange frei geben kann.

Es kann trotz Bemühung um eine gute Abdichtung der Saugglocken gegenüber der Mattenoberfläche in Einzelfällen dennoch vorkommen, daß eine einzelne aktivierte Saugglocke nicht sauber abdichtet, sei es daß die Harzmatte an der Aufsetzstelle der Saugglocke 35 eine außergewöhnlich große Unebenheit aufweist, sei es, daß am Rand 38 der Saugglocke sich ein Fremdkörper verfangen hat oder sei es, daß die Saugglocke zu knapp am Rand des Harzmattenzuschnittes aufgesetzt hat und nicht vollständig von der Harzmatte abgedeckt ist oder der Mattenrand unter Vakuumeinfluß in die Saugglocke hineingesaugt wird und so ein Leck entsteht. Falls eine der Saugglocken ein größeres Leck aufweisen sollte, besteht die Gefahr, daß in allen anderen, pneumatisch parallel geschalteten Saugglocken sich kein ausreichen hohes Vakuum aufbauen bzw. halten kann, weil über die leck gewordene Saugglocke ständig eine mehr oder weniger große Menge an Falschluft auch in die anderen Saugglocken einströmt.

Um ein Zusammenbrechen des Vakuums im gesamten Sauggreifers aufgrund eines Lecks an einer Saugglocke zu verhindern, ist es zweckmäßig, wenn im Vakuumzulauf einer jeden Saugglocke jeweils eine selbsttätig ansprechende Sicherheitsdrossel vorgesehen ist. Diese ist zum einen derart ausgebildet, daß sie erst zeitverzögert nach dem Aufschalten eines Vakuums wirksam wird, wobei die Verzögerungszeit so bemessen ist, daß sich unter normalen Umständen ohne weiteres das volle aufgeschaltete Vakuum in der zugehörigen Saugglocke aufbauen kann. Erst nach Ablauf der Verzögerungszeit geht die Sicherheitsdrossel gegebenenfalls in einen stark drosselnden Zustand über, nämlich unter der weiteren Bedingung, daß danach eine große Druckdifferenz über die Sicherheitsdrossel hinweg fortbesteht. In dem stark gedrosselten Zustand werden nur geringe Gasmengen, z.B. aufgrund eines Ausgasens der Harzmatten, behinderungsfrei durchgelassen. Für größere, leckbedingte Luftmengen stellt die im Drosselzustand befindliche Sicherheitsdrossel ein erhebliches Strömungshindernis dar. Dadurch wird verhindert, daß das Vakuum im Leitungssystem des Sauggreifer bei Auftreten eines lokalen Lecks zusammenbricht. Vielmehr bleibt im gesamtem System der im Sauggreifer angeordneten Vakuumleitungen gleichwohl ein Vakuum zumindest in einer ausreichenden Höhe erhalten. Nach Abschaltung des Vakuums an den zuvor aktivierten Saugglocken kehrt die aktivierte Sicherheitsdrosseln selbsttätig und rasch aus dem Drosselzustand wieder in den offenen Durchlaßzustand zurück.

Zu einer vollständigen Palette von Handhabungsvorgängen gehört auch das Handhaben eines aus mehreren Harzmatten gebildeten Mattenstapels 31. Durch den erfindungsgemäßen Sauggreifer lassen sich die einzelnen Harzmattenzuschnitte 25 beim aufeinander legen ohne weiteres auch aufeinander drücken, so daß die einzeln aufgestapelten Lagen aufgrund der Klebrigkeit des Harzes bereits aneinander haften. Grundsätzlich könnte ein so gebildeter Mattenstapel 31, zumindest wenn die Lagenzahl nicht groß ist und/oder wenn die Matten nicht zu schwer sind, allein durch ein Erfassen der obersten Lage mittels der Saugglocken gehandhabt werden. Hierbei ist jedoch die Gefahr nicht von der Hand zu weisen, daß sich u.U. die unterste oder mehrere zuunterst angeordnete Lagen während des Transportes vom ergriffenen Stapel teilweise lösen könnten.

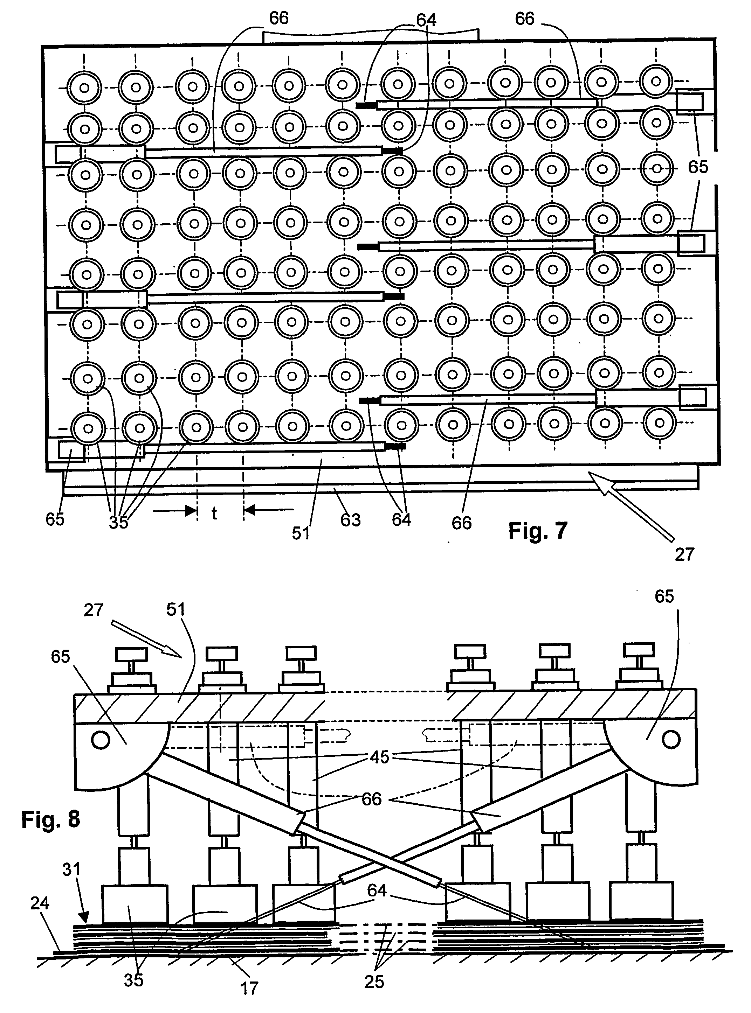

Um ein Lösen einzelner Lagen aus einem zu handhabenden Mattenstapel mit Sicherheit ausschließen zu können, sind am Rand und/oder innerhalb des Rasterfeldes der Saugglocken 35 schwenkbare Dornführungen 66 mit gesteuert teleskopartig ausfahrbaren Greifdornen 64 angeordnet. Jede der Dornführungen ist jeweils durch einen Antrieb 65 zwischen zwei durch einstellbare Anschläge bestimmten Endstellungen gesteuert hin und her schwenkbar. In der einen, in Figur 8 strichpunktiert angedeuteten Endstellung - Rückzugstellung - ist die Dornführung flach an die Unterseite der Basisplatte 51 des Sauggreifers angelegt und hinter die Saugglockenebene 36 zurück geschwenkt. In der anderen, gegenüber der Saugglockenebene 36 aufgerichteten Endstellung - Arbeitsstellung -, die in Figur 8 in vollen Linien gezeichnet ist, sind die Dornführungen 66 geneigt auf die aufzunehmenden Harzmatte 24, 25, 31 ausgerichtet.

Nachdem die Saugglocken 35 des Sauggreifers ordnungsgemäß auf die oberste Lage des Harzmattenstapels 31 aufgesetzt sind und nachdem die Dornführungen in die Arbeitsstellung aufgerichtet worden sind, können die Fixierdorn 64 teleskopartig ausgefahren und unter spitzem Winkel in die Mattenlagen des Stapel eingestochen werden. Während dieses Vorgangs liegt der Mattenstapel noch auf der Unterlage 17 auf. Die Einstichtiefe der Fixierdorne ist einstellbar, und zwar so, daß die unterste Lage der Harzmatteh noch sicher erfaßt wird. Die Fixierdorne stechen bis zur Tischoberfläche durch. Hervorzuheben ist, daß die Einstechrichtung zum Rand hin gelegt ist, d.h. die Durchstichstelle der obersten Lage liegt weiter vom Rand weg, als die Durchstichstelle der untersten Lage. Vor allem die unterste Lage 24 des Mattenstapels soll möglichst randnah gesichert werden.

Nachdem die Saugglocken mit Vakuum beaufschlagt sind und der Mattenstapel durch die eingestochenen Fixierdorne 64 gesichert ist, kann der Sauggreifer angehoben und mit ihm der Mattenstapel von der flachen Unterlage abgehoben werden. Hierbei ist es zweckmäßig, wenn der Sauggreifer zunächst eine leichte Kippbewegung vollführt, um die an der Unterlage 17 klebende unterste Matte 24 leichter, nämlich vom Rand her, lösen zu können. Die dabei auftretenden, vertikal gerichteten Belastungen innerhalb des Mattenstapels brauchen nicht über den langen Hebelarm der Fixierdorne 64 und der Dornführungen 66 aufgenommen zu werden. Vielmehr stützen sich die Fixierdorne 64 an der obersten, durch Saugkräfte sicher an den Saugglocken festgehalten Lage des Stapels ab; lediglich das kurze, im Mattenstapel steckende Dornstück ist in Vertikalrichtung auf Biegung beansprucht.

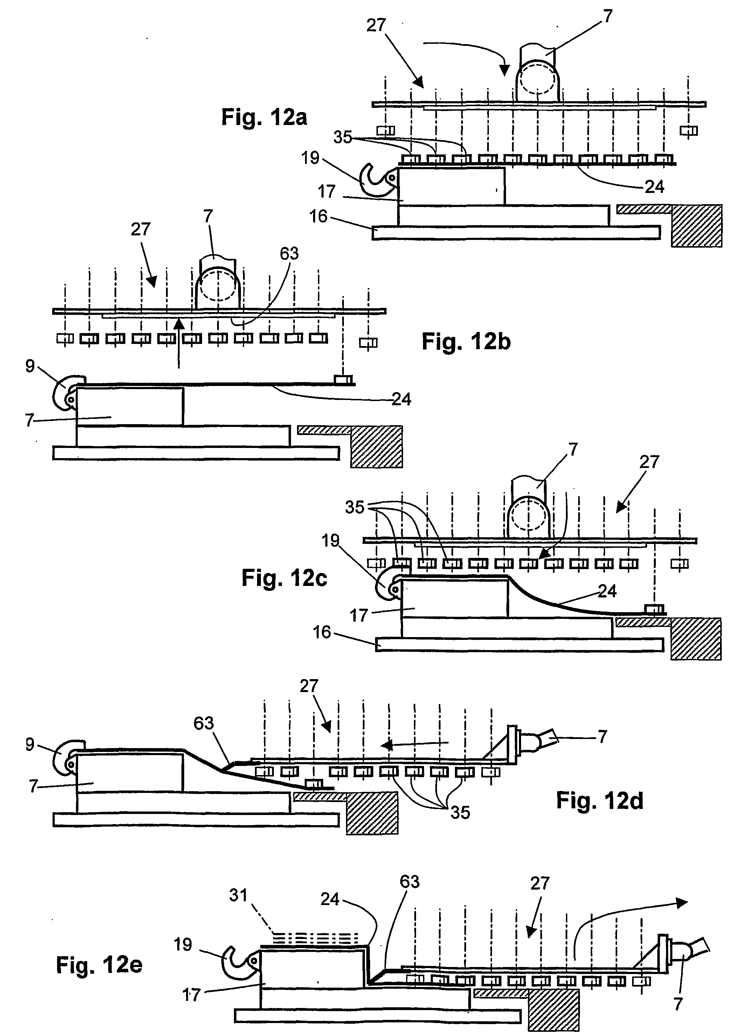

Um die universelle Einsatzfähigkeit des erfindungsgemäßen Sauggreifer zu demonstrieren, sei nachfolgend der besonders schwierige, im Zusammenhang mit Figur 3 bereits angesprochen Sonderfall noch einmal behandelt, bei dem ein Mattenzuschnitt 24 mit Rücksicht auf gewisse Formbesonderheiten des herzustellenden Werkstücks gestuft in die Gravur des Unterwerkzeugs abgelegt werden muß. Zu diesem Zweck muß der Mattenzuschnitt zuvor gestuft auf eine entsprechende Vorform-Vorrichtung 17 abgelegt werden. Hierbei wird die Harzmatte sauber in die hohle Kante der Stufe eingeformt. Zu diesem Zweck ist an einer Längsseite der Basisplatte 51 des Sauggreifers 27 ein seitlich von im abstehendes, leistenförmiges Einformungswerkzeug 63 befestigt. Auf die Arbeitsweise mit dieser Einformungswerkzeug soll weiter unten im Zusammenhang mit den Figuren 12a bis 12e näher eingegangen werden.

Weiter oben wurde bereits erwähnt, daß die Ränder 38 der Saugglocken in regelmäßigen zeitlichen Abständen durch Streifen der Saugglocken über rotierende Reinigungsbürsten 55 gereinigt werden sollen, um eine Anreicherung von Kunstharz an den Saugglocken zu vermeiden. In Figur 9 ist der Vorgang des Reinigens der Saugglocken gegenüber der Darstellung in Figur 1 vergrößert und von der Seite her gesehen gezeichnet, wobei jedoch bei dem in Figur 9 dargestellten Ausführungsbeispiel ein anderes System von Reinigungsbürsten 55' zum Einsatz gelangt.

Eine Besonderheit der Reinigungsanordnung nach Figur 9 besteht darin, daß die dort gezeigten, rotierenden Reinigungsbürsten 55' entsprechen der rastermäßigen Anordnung der Saugglocken ebenfalls rastermäßig und in einem identischen Raster angeordnet sind, wobei die Borsten der Reinigungsbürsten in einem achssenkrecht zur Rotationsachse liegenden, runden Bürstenbrett gehalten sind. Jeder Saugglocke ist jeweils eine eigene Reinigungsbürste zugeordnet. Diese Borsten der Reinigungsbürsten sind unterschiedlich lang, und zwar sind sie am Außenrand kürzer als in der Bürstenmitte, so daß sich ein der lichten Querschnittsform der Saugglocke angepaßte Profilform der Reinigungsbürste ergibt. Bei dem in Figur 9 dargestellten Ausführungsbeispiel sind die Reinigungsbürsten 55' alle in einer vertikalen Ebene angeordnet, so daß die abgebürsteten Partikel nicht in die Antriebsmechanik der Bürsten fallen können. Auch die Reinigungsbürsten 55' nach Figur 9 sind leicht austauschbar in den entsprechenden Behälter 58 gehaltert, um sie im Falle einer Verschmutzung rasch gegen neue oder saubere Bürsten austauschen zu können.

Zum Reinigen der Saugglocken mit einer Einrichtung nach Figur 9 wird der Sauggreifer 27 bei vertikal ausgerichteter Saugglockenebene 36 und übereinstimmender Lage des Rasters der Saugglocken und der Reinigungsbürsten vorsichtig axial in die rotierenden Reinigungsbürsten hinein gedrückt. Zur verbesserung der Reinigungswirkung kann der Sauggreifer dabei eine kleine Zirkularbewegung unter Parallelversatz in der Saugglockenebene durchführen.

Nachdem die baulichen Merkmale des erfindungsgemäßen Sauggreifers 27 geschildert sind, sei nachfolgend noch dessen Arbeitsweise eingegangen.

Das Aufnehmen eines einzelnen Harzmattenzuschnittes mit dem Sauggreifer von einer flachen Unterlage ist in zwei Phasen in den Figuren 10a und 10b gezeigt, wobei nachfolgend wegen einzelner baulicher Merkmale des Sauggreifers auch noch auf die Figuren 5 und 6 Bezug genommen wird. Zunächst wird gemäß Figur 10a der Sauggreifer durch den Handhabungsroboter mit der Saugglockenebene 36 in dichtem Abstand über der von dem Zuschneidetisch 3 aufzunehmenden Harzmatte gehalten. Aus dieser aufnahmebereiten Greiferposition heraus werden dann die Saugglocken auf den Mattenzuschnitt für sich zubewegt, wobei ein geringer Zeitversatz zwischen den einzelnen Axialhüben der Saugglocken von Vorteil ist. Die Saugglocken schlagen dabei mit ihrem Rand in die Harzmatte ein, so daß sie sich darin einfurchen und dadurch gut abdichten. Zugleich mit dem Auftreffen der Saugglocken wird jeweils das Vakuum aufgeschaltet und werden jeweils die oberseitig (47) am Zylinderkopf 54 anliegenden Kolbenstangenbremsen 52 angesteuert. Aufgrund der festgeklemmten Kolbenstangenbremsen ist jede der Kolbenstangen 46 in Abwärtsrichtung in der jeweiligen Aufnahmeposition fixiert. Dadurch ist der Pneumatikzylinder in der Lage, ohne Axialbewegung der Kolbenstange eine Last aufzunehmen. Die größte Belastung des Sauggreifers tritt vor allem beim Loslösen des an der Unterlage 3 festklebenden Harzmättenzuschnittes 24 auf. Der ebene Zustand der aufgenommenen Harzmatte bleibt während des Abhebens und des gesamten Transportweges erhalten, weil die Harzmatte von vielen in einer gemeinsamen Ebene liegenden und in ihrer Hubbeweglichkeit fixierten Saugglocken sicher und in ebenem, nahezu durchhangfreien Zustand gehalten ist.

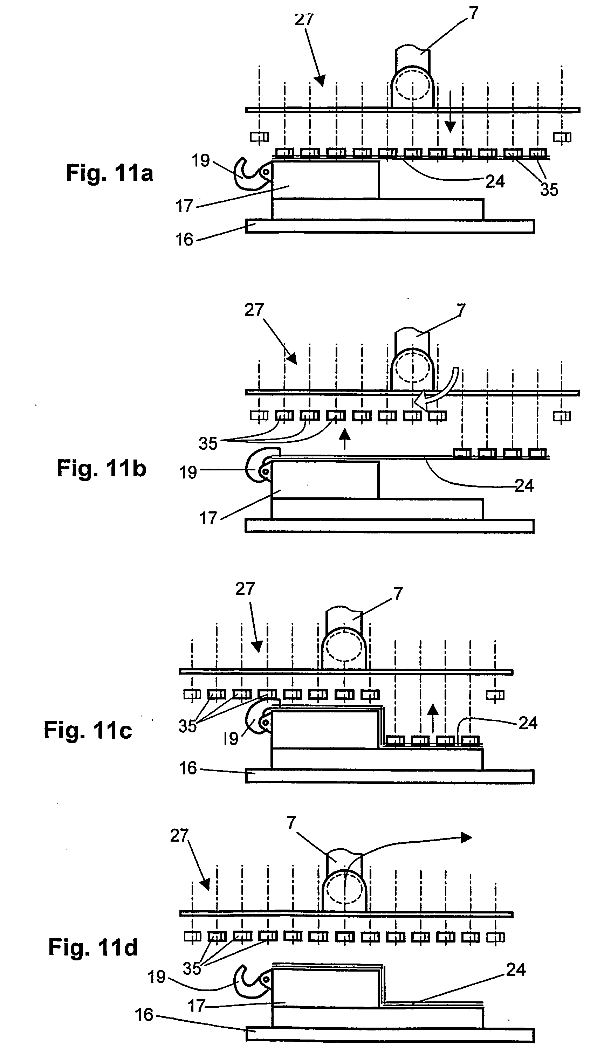

Das Ablegen des aufgenommenen Harzmattenzuschnittes auf eine ebene Unterlage läuft sehr einfach ab und bedarf im Prinzip keiner besonderen Erläuterung. Deshalb soll unter Bezugnahme auf die vierteilige Bilderfolge der Figuren 11a bis 11d der schwierigere Sonderfall des Ablegens der Harzmatte 24 auf eine gestufte Stapelvorrichtung 17 ohne Umgreifen durch den Sauggreifer behandelt werden:
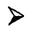 Zunächst wird der Sauggreifer 27 bzw. die an ihm hängende Harzmatte 24 durch den Handhabungsroboter 7 der oberen Stufe der Stapelvorrichtung so weit angenähert, daß die Harzmatte die Ablageoberfläche berührt (Phase I gemäß Figur 11a), wobei selbstverständlich auch die richtige Horizontallage der Harzmatte herbeigeführt ist. Die seitliche Klemmleiste 19 ist zunächst noch offen.
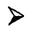 Dann werden, nachdem die Klemmleiste 19 in den Klemmzustand überführt worden ist, unter unbeweglicher Aufrechterhaltung der Greiferposition die im Bereich der oberen Ablagestufe und die im Mattenbereich für den später vertikalen Abschnitt der Harzmatte liegenden Saugglocken belüftet und angehoben, wogegen die übrigen Saugglocken, die dem Mattenabschnitt der unteren Ablagestufe zugeordnet sind, noch aktiv bleiben (Phase II gemäß Figur 11b). Die geschlossene Klemmleiste 19 verhindert ein seitliches Wegrutschen des Zuschnittes 24 unter dem Einfluß des schwerkraftbedingten, horizontalen Zuges.
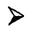 Ausgehen von diesem Zwischenzustand des Ablagevorganges wird der Sauggreifer unter Aufrechterhaltung der Horizontalstellung auf einem Keisbogen parallelversetzt, wobei der der unteren Ablagestufe zugeordnete Mattenabschnitt aus der angehobenen Position auf die untere Ablagestufe zubewegt wird. Dabei legt sich der dem vertikalen Teil der Stufe zugeordnete Mattenabschnitt an diese vertikale Ablagefläche an (Phase III gemäß Figur 11c).
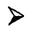 Nun können bei zunächst noch unveränderter Greiferstellung auch die bisher noch aktivierten Saugglocken des Mattenabschnitts der unteren Ablagestufe belüftet und in den Sauggreifer zurückgezogen, d.h. in die aufnahmebereite Ausgangsstellung angehoben werden (Phase VI gemäß Figur 11d). Der Sauggreifer ist dann zur Übernahme einer neuen Harzmatte bereit. Die Klemmleiste 19 kann wieder geöffnet werden.

Bei dem im Zusammenhang mit den Figuren 11a bis 11d geschilderte Verfahren zum geordneten stufenförmigen Ablegen einer Harzmatte kann es u.U. vorkommen, daß der dem vertikalen Stufenabschnitt zugeordnete Teil der Harzmatte dort nicht ganz glatt oder nicht stets gleichmäßig anliegt. Falls es das anschließende Abformverfahren bzw. das entsprechende Formwerkzeug erfordern sollte, daß auch der später vertikal liegende Harzmattenteil sehr glatt an der Stufenoberfläche anliegt, so kann u.U. mittels des Verfahrens gemäß der Figurenfolge 12a bis 12e ein besseres Ablageergebnis erreicht werden, bei dem fünf Phasen dargestellt sind:
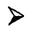 Die erste in Figur 12a gezeigte Phase stimmt noch ganz mit der ersten Phase gemäß Figur 11a überein. so daß in soweit auf die obige Schilderung verwiesen werden kann.
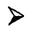 Auch die zweite Phase nach Figur 12b ist noch der gemäß Figur 11b sehr ähnlich. Unterschiedlich ist hier lediglich, daß der Harzmattenzuschnitt 24 nach dem ordnungsgemäßen Ablegen auf der oberen Stufe vom Sauggreifer 27 nur noch an dem der oberen Stufe gegenüber liegenden Mattenrand mit der letzten Reihe von Saugglocken festgehalten wird.
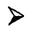 Für das weitere Vorgehen wird eine Hilfsablagefläche seitlich neben der Ablagefläche der unteren Stufe benötigt, die in den Figuren 12a - e schraffiert angedeutet ist. In der dritten Phase nach Figur 12c wird der bisher noch vom Sauggreifer gehaltene Mattenrand abgesenkt und auf dieser Hilfsfläche seitenversetzt zur unteren Ablagestufe abgelegt, wobei die Harzmatte von der freien Kante zur oberen Ablagestufe an girlandenartig durchhängt.
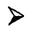 Der Sauggreifer muß nun umgreifen und diesen vorläufig abgelegten Mattenrand mit einer anderen Reihe von Saugglocken erneut aufnehmen, wobei das leistenförmige Einformungswerkzeug 63 in einem der Stufenhöhe entsprechenden Abstand von der freien Stufenkante aus an die Harzmatte 24 angelegt wird. Die Reihe von Saugglocken, die bei dieser Greiferstellung dem Mattenrand am nächsten liegt, wird an die Harzmatte angelegt und aktiviert, d.h. mit Vakuum beaufschlagt und die Kolbenstangen mit der beweglichen Bremse 52 fixiert (Phase IV gemäß Figur 12d).
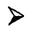 Nach diesem Umgreifen kann dann der letzte teil des ordnungsgemäßen Ablegens der Matte 24 im Bereich der unteren Stufe beginnen. Hierbei wird das Einformungswerkzeug 63 in die hohle Kante der Stufe hineinbewegt. Bei dieser Greiferbewegung wird sowohl der später vertikal liegende Mattenteil als auch der auf der unteren Stufe horizontal liegende Mattenteil ausgespannt gehalten. An der einen Reihe von Saugglocken, die den Mattenrand erneut festhält, wird nur ein mäßiges Vakuum aufgeschaltet, so daß die gehaltene Matte auch über die Saugglocke geringfügig hinweggleiten kann. Dadurch kann gewährleistet werden, daß die Harzmatte konturtreu der Stufenform folgend auf der stufenförmigen Stapelvorrichtung 17 abgelegt wird. Anschließend werden die letzten Saugglocken deaktiviert, angehoben und der Sauggreifer entfernt.

## Patentansprüche

1. Verfahren zum automatisierten Handhaben von Harzmatten (24, 25, 31) unterschiedlicher Form und Größe bei der Herstellung von SMC-Teilen mittels eines durch eine mehrachsig bewegliche Handhabungseinrichtung (7) manipulierbaren Greifers (27), mit folgenden Schritten in dem Handhabungsverfahren:
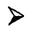 die auf einer flach-ebenen Unterlage (3) liegenden Harzmatten (24, 25, 31) werden auf ihrer oberseitig zugänglichen Flachseite mittels an einer Vielzahl von Ansatzstellen simultan angreifenden Vakuums erfaßt, in ebenem, d.h. nahezu durchhangfreiem Zustand aufgenommen und befördert,
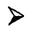 die zur Übertragung des Vakuums von dem Sauggreifer (27) in die Oberfläche der Harzmatten (24, 25, 31) verwendeten, aus einem unnachgiebigen Werkstoff bestehenden und kontaktseitig mit einem im Querschnitt nach Art einer Ringschneide spitz zulaufenden Rand (38) versehenen Saugglocken (35) werden vor dem Aufschalten von Vakuum dichtend in die Oberfläche der plastischen Harzmatten (24, 25, 31) eingepreßt,
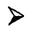 nach dem Ablegen einer oder mehrerer beförderten Harzmatte(n) (24, 25, 31) werden die Ränder (38) der Saugglocken (35) mittels rotierender Bürsten (55, 55') mechanisch gereinigt.

2. Verfahren nach Anspruch 1,
**dadurch gekennzeichnet, daß**
durch Wahl von Form und Größe des Rasterfeldes der durch Vakuumbeaufschlagung aktivierten, gerastert angeordneten Saugglocken (35) des Sauggreifers (27) dieser der Form und Größe der jeweils zu handhabenden Harzmatte (24, 25, 31) angepaßt wird.

3. Verfahren nach Anspruch 1,
**dadurch gekennzeichnet, daß**
die Harzmatte (24, 25, 31) beim Ablegen in ein Formwerkzeug durch den Sauggreifer (27) an die Form des Formwerkzeuges (18) angepaßt und in dessen Gravur eingeformt wird.

4. Verfahren nach Anspruch 3,
**dadurch gekennzeichnet, daß**
das Einformen der Harzmatte (24, 25, 31) beim Ablegen durch gezielte Hubbewegung der Saugglocken (35) in Relation zum Sauggreifer (27) erfolgt.

5. Verfahren nach Anspruch 3,
**dadurch gekennzeichnet, daß**
das Einformen der Harzmatte (24, 25, 31) beim Ablegen durch partielles Ablegen erst der einen Hälfte der Harzmatte (24, 25, 31) unter Schrägstellung des Sauggreifer (27) und nach Lösen der eingeformten Hälfte vom Sauggreifer (27) und anschließendem Schwenken desselben (27) auch das Ablegen der zweiten Hälfte der Harzmatte (24, 25, 31) erfolgt.

6. Verfahren nach Anspruch 3,
**dadurch gekennzeichnet, daß**
das Einformen der Harzmatte beim Ablegen durch gezieltes Abknicken des Sauggreifers um eine in der Saugglockeneben liegende Schwenkachse erfolgt.

7. Verfahren nach Anspruch 1,
**dadurch gekennzeichnet, daß**
zum Handhaben und Befördern von mehrlagigen Stapeln von Harzmatten die im Stapel zuoberst liegende Harzmatte oberseitig durch Vakuum erfaßt und die darunter liegenden Lagen von Harzmatten an der Obersten Lage mechanisch durch randseitig geneigt eingestochene Fixierdorne (64) fixiert wird.

8. Vorrichtung zum automatisierten Handhaben von Harzmatten (24, 25, 31) unterschiedlicher Form und Größe bei der Herstellung von SMC-Teilen, mit einem durch eine mehrachsig bewegliche Handhabungseinrichtung (7) manipulierbaren Sauggreifer (27) zum oberseitigen Erfassen der Harzmatten gleichzeitig an mehreren Stellen, insbesondere zur Ausübung des Verfahrens nach Anspruch 1, wobei die folgenden Merkmale in der Handhabungsvorrichtung vorgesehen sind:
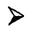 am Sauggreifer (27) ist unterseitig eine Vielzahl von mit ihrer offenen Seite nach unten weisenden und mit ihrem Rand (38) gemeinschaftlich in einer Saugglockenebene (36) liegenden Saugglocken (35) vorgesehen, die über eine Fläche, die der größten zu handhabenden Harzmatte entspricht, rasterartig verteilt angeordnet sind, wobei der gegenseitige Querabstand (t) der Saugglocken (35) innerhalb des Rasters derart bemessen ist, daß die kleinste zu handhabende Harzmatte wenigstens noch zwei Saugglocken (35) abdeckt und wobei jede der Saugglocken (35) jeweils einzeln ansteuerbar (37) und mit Vakuum beaufschlagbar ist,
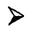 die aus einem unnachgiebigen Werkstoff bestehenden Saugglocken (35) weisen einen im Querschnitt nach Art einer Ringschneide spitz zulaufenden Rand (38) und im randnahen Bereich eine annähernd zylindrische Innen- und Außenfläche auf,
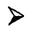 im Aktionsbereich der den Sauggreifer (27) manipulierenden Handhabungseinrichtung (7) ist wenigstens eine drehantreibare Reinigungsbürste (55, 55') angeordnet, mit der die Rändern (38) aller Saugglocken (35) in reinigenden Kontakt bringbar ist bzw. sind.

9. Handhabungsvorrichtung nach Anspruch 8,
**dadurch gekennzeichnet, daß**
jede Saugglocke (35) axial und orthogonal zur Saugglockenebene (36) hubbeweglich gehaltert und jeweils mit einem für sich steuerbarer Kraftspeicher (45) in der Weise verbunden ist, daß jede Saugglocke (35) auf einen jeweiligen Steuerbefehl hin jeweils für sich aus einer Ruheposition in eine axial dazu versetzt liegende Aufnahmeposition beschleunigbar ist.

10. Handhabungsvorrichtung nach Anspruch 8,
**dadurch gekennzeichnet, daß**
der von einer Saugglocke (35) oberhalb des Randes (38) eingeschlossene rotationssymmetrische Innenraum eine axiale Höhe (h) von etwa 25 bis 40 % des Randdurchmessers (d) aufweist.

11. Handhabungsvorrichtung nach Anspruch 8,
**dadurch gekennzeichnet, daß**
der oberseitige Boden (39) des von der Saugglocke (35) umschlossenen Innenraumes eine vom Umfang zum Boden (39) verrundete Oberflächenform ähnlich ein Rotationsellipsoid nach Art eines Kesselbodens aufweist.

12. Handhabungsvorrichtung nach Anspruch 8,
**dadurch gekennzeichnet, daß**
der Durchmesser (d) einer jeden Saugglocke (35) an ihrem Rand (38) etwa 2,5 bis 10 cm, vorzugsweise etwa 3 bis 4 cm beträgt.

13. Handhabungsvorrichtung nach Anspruch 8,
**dadurch gekennzeichnet, daß**
das lichte Volumen einer jeden Saugglocke (35) etwa 3 bis 300 cm³, vorzugsweise etwa 5 bis 20 cm³ beträgt.

14. Handhabungsvorrichtung nach Anspruch 8,
**dadurch gekennzeichnet, daß**
das Teilungsmaß (t) des der flächenmäßigen Verteilung der Saugglocken (35) in der Saugglockenebene (36) entsprechenden Rasters etwa 120 bis 150 % des Durchmessers (d) der Saugglocken (35) beträgt.

15. Handhabungsvorrichtung nach Anspruch 8,
**dadurch gekennzeichnet, daß**
das der flächenmäßigen Verteilung der Saugglocken (35) in der Saugglockenebene (36) entsprechende Raster hexagonal oder orthogonal ausgebildet ist.

16. Handhabungsvorrichtung nach Anspruch 8,
**dadurch gekennzeichnet, daß**
jede Saugglocke (35) jeweils über ein oberseitig an der Saugglocke (35) angebrachtes, eine elastische Schwenkung zulassendes Zwischenglied (40) aus Gummi, aus einer Schraubenfeder oder aus einem Faltenbalg mit dem Sauggreifer (27) zumindest mittelbar verbunden ist.

17. Handhabungsvorrichtung nach Anspruch 16,
**dadurch gekennzeichnet, daß**
das Zwischenglied (40) axial hohl ausgebildet (Bohrung 50') und der zu der zugehörigen Saugglocke (35) gehörige Vakuumanschluß (37) oberhalb des Zwischengliedes (40) derart angeordnet ist, daß das Vakuum durch das Zwischenglied (40) hindurch der Saugglocke (35) zuführbar ist.

18. Handhabungsvorrichtung nach Anspruch 8,
**dadurch gekennzeichnet, daß**
mehrere walzenförmige Reinigungsbürsten (55) im Aktionsbereich der den Sauggreifer (27) manipulierenden Handhabungseinrichtung (7) parallel nebeneinander in einer horizontalen Ebene angeordnet sind.

19. Handhabungsvorrichtung nach Anspruch 18,
**dadurch gekennzeichnet, daß**
die walzenförmigen Reinigungsbürsten (55) bezüglich der über die Borstenenden hinweg gelegten Einhüllenden - in axialer Richtung gesehen - in der Weise profiliert ausgebildet sind, daß axial verlaufende Streifen von längeren Borsten mit Streifen von kürzeren Borsten in Umfangsrichtung abwechseln.

20. Handhabungsvorrichtung nach Anspruch 19,
**dadurch gekennzeichnet, daß**
axial verlaufende Streifen von längeren Borsten und die dazwischen liegenden Streifen von kürzeren Borsten zur Axialrichtung geneigt sind und entlang einer steilen Schraubenganglinie verlaufen.

21. Handhabungsvorrichtung nach Anspruch 8,
**dadurch gekennzeichnet, daß**
eine Vielzahl von rotierenden Reinigungsbürsten (55') in einem identischen Raster wie die Saugglocken (35) ebenfalls rastermäßig in einer Ebene angeordnet sind, wobei die Borsten der runden Reinigungsbürsten (55') wenigstens angenähert parallel zur Rotationsachse ausgerichtet sind und wobei jeder Saugglocke (35) jeweils eine eigene Reinigungsbürste (55') zugeordnet ist.

22. Handhabungsvorrichtung nach Anspruch 21,
**dadurch gekennzeichnet, daß**
die Borsten der Reinigungsbürsten (55') jeweils unterschiedlich lang, und zwar am Außenrand kürzer als in der Bürstenmitte sind, so daß sich ein der lichten Querschnittsform der Saugglocke (35) angepaßte Profilform der Reinigungsbürste (55') ergibt.

23. Handhabungsvorrichtung nach Anspruch 21,
**dadurch gekennzeichnet, daß**
die Reinigungsbürsten (55') alle in einer gemeinsamen, vertikal ausgerichteten Ebene angeordnet sind.

24. Handhabungsvorrichtung nach Anspruch 18 oder 21,
**dadurch gekennzeichnet, daß**
die Reinigungsbürsten (55, 55') leicht austauschbar gehaltert sind.

25. Handhabungsvorrichtung nach Anspruch 8,
**dadurch gekennzeichnet, daß**
am Rand und/oder innerhalb des Rasterfeldes der Saugglocken (35) schwenkbare Dornführungen (66) mit gesteuert teleskopartig ausfahrbaren Fixierdornen (64) angeordnet sind, die jeweils zwischen zwei durch einstellbare Anschläge bestimmten Endstellungen gesteuert hin und her schwenkbar sind (Antrieb 65), wobei die Dornführungen (66) in der einen Endstellung - Rückzugstellung - flach an den Sauggreifer (27) angelegt und hinter die Saugglockenebene (36) zurück geschwenkt und in der anderen, gegenüber der Saugglockenebene (36) aufgerichteten Endstellung - Arbeitsstellung - geneigt auf die aufzunehmenden Harzmatte (24, 25, 31) ausgerichtet sind.

26. Handhabungsvorrichtung nach Anspruch 25,
**dadurch gekennzeichnet, daß**
die teleskopartig ausfahrbaren Fixierdorne (64) in der ganz zurückgezogenen Stellung mit ihrem vorderen Ende um das Maß der Einstechtiefe aus der zugehörigen Dornführung (66) axial herausschauen.

27. Handhabungsvorrichtung nach Anspruch 8,
**dadurch gekennzeichnet, daß**
die den Sauggreifer (27) manipulierende Handhabungseinrichtung (7) als mehrachsiger, insgesamt verfahrbarer Industrieroboter ausgebildet ist.

28. Handhabungsvorrichtung nach Anspruch 8,
**dadurch gekennzeichnet, daß**
jede Saugglocke (35) jeweils am freien Ende der Kolbenstange (46) eines im Sauggreifer (27) unnachgiebig befestigten Hubzylinders (45) gehaltert und jeweils für sich orthogonal zur Saugglockenebene (36) heb- und senkbar ist.

29. Handhabungsvorrichtung nach Anspruch 28,
**dadurch gekennzeichnet, daß**
jede Saugglocke (35) jeweils unter Zwischenfügung eines eine elastische Schwenkung zulassenden Zwischengliedes (40) aus Gummi, aus einer Schraubenfeder oder aus einem Faltenbalg am freien Ende der Kolbenstange (46) des jeweiligen Hubzylinders (45) gehaltert ist.

30. Handhabungsvorrichtung nach Anspruch 28 oder 29,
**dadurch gekennzeichnet, daß**
die Kolbenstangen (46) der Hubzylinder (45) und gegebenenfalls die elastischen Zwischenglieder (40) jeweils mit einer axial durch sie hindurch gehenden Bohrung (50, 50') oder Fluidleitung versehen und die Kolbenstangen (46) oberseitig dichtend aus den Zylindergehäusen herausgeführt sind und daß die Vakuumanschlüsse (37) für die Saugglocken (35) jeweils an den oberen Kolbenstangenenden angeordnet sind, derart daß das Vakuum der jeweils zugehörigen Saugglocke (35) durch die Kolbenstange (35) und gegebenenfalls durch das elastische Zwischenglied (40) hindurch zuführbar ist.

31. Handhabungsvorrichtung nach Anspruch 28,
**dadurch gekennzeichnet, daß**
die Kolbenstangen (46) der Hubzylinder (45) auch oberseitig aus den Zylindergehäusen dichtend herausgeführt sind und daß auf dem frei zugänglichen Teil der Kolbenstangen (46) jeweils eine ansteuerbare und mit einem Steueranschluß (53) versehene, je nach Ansteuerungszustand auf der Kolbenstange (46) axial leichtgängig verschiebbare oder auf ihr fixierte Kolbenstangenbremse (52) angeordnet ist, die im Zusammenwirken mit der äußeren Stirnseite (47) des Zylindergehäuses zur axialen Begrenzung des Kolbenstangenhubes dient.

32. Handhabungsvorrichtung nach Anspruch 8,
**dadurch gekennzeichnet, daß**
an wenigstens einer Längsseite des Sauggreifers (27) ein seitlich von im abstehendes, vorzugsweise leistenförmiges Einformungswerkzeug (63) befestigt ist.

33. Handhabungsvorrichtung nach Anspruch 8,
**dadurch gekennzeichnet, daß**
der Sauggreifer in zwei zueinander verschwenkbare Teile unterteilt ist, wobei die Schwenkachse in der Saugglockenebene (36) angeordnet ist.

## Claims

1. Method for handling resin-impregnated mats (24, 25, 31) of differing shapes and sizes on an automated basis for the manufacture of SMC components by means of a gripper (27) which can be manipulated by a handling device (7) displaceable along several axes, said handling method incorporating the following steps:
% the resin-impregnated mats (24, 25, 31) lying on a flat, level base (3) are gripped from their accessible top flat face by means of a vacuum acting simultaneously at a plurality of contact points, picked up in a flat state, i.e. with virtually no sag, and conveyed,
% the suction bells (35) used to transfer the vacuum from the suction gripper (27) into the surface of the resin-impregnated mats (24, 25, 31), made from an inflexible material and provided on the contact side with an edge (38) tapering to a point in the manner of an annular cutter in cross-section, are pressed into the surface of the plastic resin-impregnated mats (24, 25, 31) to produce a seal before the vacuum is switched on,
% after one or more conveyed resin-impregnated mat(s) (24, 25, 31) has/have been set down, the edges (38) of the suction bells (35) are mechanically cleaned by means of rotating brushes (55, 55').

2. Method as claimed in claim 1,
**characterised in that**
the suction bells (35) of the suction gripper (27) activated by generating a vacuum are disposed in a grid pattern and can be adapted to the respective resin-impregnated mats (24, 25, 31) to be handled by selecting the shape and size of their grid pattern accordingly.

3. Method as claimed in claim 1,
**characterised in that**
as it is positioned in a mould by the suction gripper (27), the resin-impregnated mat (24, 25, 31) is adapted to the shape of the mould (18) and pressed into its imprint.

4. Method as claimed in claim 3,
**characterised in that**
as it is pressed in, the resin-impregnated mat (24, 25, 31) is pressed by a specific lifting movement of the suction bells (35) in relation to the suction gripper (27).

5. Method as claimed in claim 3,
**characterised in that**
as it is pressed in, the resin-impregnated mat (24, 25, 31) is pressed in by partially setting down one half of the resin-impregnated mat (24, 25, 31) first of all with the suction gripper (27) in an inclined position and, once the pressed-in half has been released by the suction gripper (27) and the latter (27) pivoted, the second half of the resin-impregnated mat (24, 25, 31) is also set down.

6. Method as claimed in claim 3,
**characterised in that**
as it is pressed in, the resin-impregnated mat is pressed in by bending the suction gripper down in a specific manner about a pivot axis lying in the suction bell plane.

7. Method as claimed in claim 1,
**characterised in that**
in order to handle and convey multi-layered stacks of resin-impregnated mats, the resin-impregnated mat lying uppermost in the stack is gripped from the top face by means of a vacuum and the layers of resin-impregnated mats lying underneath are fixed to the uppermost layer by fixing spikes (64) inserted at an angle from the edge.

8. Device for handling resin-impregnated mats (24, 25, 31) of differing shapes and sizes on an automated basis for the manufacture of SMC components by means of a gripper (27) which can be manipulated by a handling device (7) displaceable along several axes for gripping the top face of the resin-impregnated mats simultaneously at several points, in particular for implementing the method as claimed in claim 1, said handling device being provided with the following characterising features:
% provided on the bottom face of the suction gripper (27) is a plurality of suction bells (35) lying with their open side pointing downwards and with their edge (38) lying jointly in a suction bell plane (36), which are distributed in a grid pattern across a surface area corresponding to the largest resin-impregnated mat to be handled, the mutual transverse spacing (t) of the suction bells (35) within the grid pattern being dimensioned so that the smallest resin-impregnated mat to be handled overlaps with at least two suction bells (35), and each of the suction bells (35) can be individually activated (37) and placed under vacuum,
% the suction bells (35) made from an inflexible material have an edge (38) tapering to a point in the manner of an annular cutter in cross-section and a more or less cylindrical internal and
external surface in the region close to the edge, % at least one cleaning brush (55, 55') which can be driven in rotation is provided in the region where the handling device (7) manipulating the suction grippers (27) acts, by means of which the edges (38) of all the suction bells (35) can be brought into contact for cleaning purposes.

9. Handling device as claimed in claim 8,
**characterised in that**
each suction bell (35) is retained so that it can be lifted axially and orthogonally with respect to the suction bell plane (36) and is respectively connected to a separately controllable force accumulator (45) so that every suction bell (35) can be accelerated individually from a non-operating position into a pickup position lying offset therefrom when prompted respectively by a control command.

10. Handling device as claimed in claim 8,
**characterised in that**
the rotationally symmetrical interior enclosed by a suction bell (35) above the edge (38) has an axial height (h) of approximately 25 to 40 % of the edge diameter (d).

11. Handling device as claimed in claim 8,
**characterised in that**
the top-end base (39) of the interior surrounded by the suction bell (35) has a rounded surface contour from the periphery to the base (39) in the shape of an ellipsoid akin to a kettle base.

12. Handling device as claimed in claim 8,
**characterised in that**
the diameter (d) of every suction bell (35) is approximately 2.5 to 10 cm, preferably approximately 3 to 4 cm, at its edge (38).

13. Handling device as claimed in claim 8,
**characterised in that**
the internal volume of every suction bell (35) is approximately 3 to 300 cm³, preferably approximately 5 to 20 cm³.

14. Handling device as claimed in claim 8,
**characterised in that**
the pitch size (t) of the grid pattern corresponding to the surface distribution of suction bells (35) in the suction bell plane (36) is approximately 120 to 150 % of the diameter (d) of the suction bells (35).

15. Handling device as claimed in claim 8,
**characterised in that**
the grid pattern corresponding to the surface distribution of the suction bells (35) in the suction bell plane (36) is of a hexagonal or orthogonal design.

16. Handling device as claimed in claim 8,
**characterised in that**
every suction bell (35) is respectively connected to the suction gripper (27), at least indirectly via an intermediate member (40) permitting an elastic pivoting movement, mounted on the top end of the suction bell (35), made from rubber, in the form of a helical spring or in the form of expanding bellows.

17. Handling device as claimed in claim 16,
**characterised in that**
the intermediate member (40) is of an axially hollow design (bore 50') and the vacuum connection (37) belonging to the associated suction bell (35) is disposed above the intermediate member (40) so that the vacuum can be delivered through the intermediate member (40) to the suction bell (35).

18. Handling device as claimed in claim 8,
**characterised in that**
several cylindrical cleaning brushes (55) are disposed parallel with one another in a horizontal plane in the region where the handling device (7) manipulating the suction grippers (27) acts.

19. Handling device as claimed in claim 18,
**characterised in that**
the cylindrical cleaning brushes (55) are contoured to provide a curvature beyond the bristle ends - as viewed in the axial direction - so that axially extending strips of longer bristles alternate with strips of shorter bristles in the circumferential direction.

20. Handling device as claimed in claim 19,
**characterised in that**
axially extending strips of longer bristles and the strips of shorter bristles lying in between extend at an angle to the axial direction and follow a steep screw thread contour.

21. Handling device as claimed in claim 8,
**characterised in that**
a plurality of rotating cleaning brushes (55') is disposed in an identical grid pattern to the suction bells (35) which are likewise arranged in a grid pattern in one plane and the bristles of the round cleaning brushes (55') are oriented at least more or less parallel with the axis of rotation, and every suction bell (35) co-operates respectively with its own cleaning brush (55').

22. Handling device as claimed in claim 21,
**characterised in that**
the bristles of the cleaning brushes (55') are each of different lengths and are effectively shorter at the outer edge than in the brush middle, so that the contoured shape of the cleaning brushes (55') is adapted to the internal cross-sectional shape of the suction bell (35).

23. Handling device as claimed in claim 21,
**characterised in that**
the cleaning brushes (55') are all disposed in a common, vertically oriented plane.

24. Handling device as claimed in claim 18 or 21,
**characterised in that**
the cleaning brushes (55, 55') are mounted so that they can be easily replaced.

25. Handling device as claimed in claim 8,
**characterised in that**
pivotable spike guides (66) with controlled, telescopically extractable fixing spikes (64) are disposed on the edge of and/or within the grid pattern of the suction bells (35), each of which can be pivoted backwards and forwards in a controlled manner (drive 65) between two end positions defined by adjustable stops, which spike guides (66) lie flat against the suction gripper (27) in one end position - retracted position - pivoted back behind the suction bell plane (36) and in the other end position - operating position - which is upright with respect to the suction bell plane (36) are inclined at an angle with respect to the resin-impregnated mat (24, 25, 31) to be picked up.

26. Handling device as claimed in claim 25,
**characterised in that**
in the fully retracted position, the telescopically extractable fixing spikes (64) extend with their front end protruding axially out from the co-operating spike guide (66) by the length of the insertion depth.

27. Handling device as claimed in claim 8,
**characterised in that**
the handling device (7) manipulating the suction gripper (27) is provided in the form of a multi-axial industrial robot which can be moved as a whole.

28. Handling device as claimed in claim 8,
**characterised in that**
every suction bell (35) is respectively retained at the free end of the piston rod (46) of a lifting cylinder (45) inflexibly secured in the suction gripper (27) and can be individually raised and lowered perpendicular to the suction bell plane (36) in each case.

29. Handling device as claimed in claim 28,
**characterised in that**
every suction bell (35) is respectively retained on the free end of the piston rod (46) of the respective lifting cylinder (45) with an intermediate member (40) permitting an elastic pivoting motion connected in between, made from rubber, in the form of a helical spring or in the form of expanding bellows.

30. Handling device as claimed in claim 28 or 29,
**characterised in that**
the piston rods (46) of the lifting cylinders (45) and optionally the elastic intermediate members (40) are each provided with an end-to-end bore (50, 50') or fluid line and the piston rods (46) extend out from the top face of the cylinder housings in a sealed arrangement and the vacuum connections (37) for the suction bells (35) are respectively disposed on the top piston rod ends so that the vacuum of the respective co-operating suction bell (35) can be delivered through the piston rod (35) and optionally through the elastic intermediate member (40).

31. Handling device as claimed in claim 28,
**characterised in that**
the piston rods (46) of the lifting cylinders (45) also extend out of the top face of the cylinder housings in a sealed arrangement and an individually activatable piston rod brake (52) with a control connection (53) is disposed respectively on the freely accessible part of the piston rods (46) and can be readily moved on the piston rod axially or fixed on it depending on the activation state, its purpose being to axially restrict the piston rod stroke in conjunction with the external end face (47) of the cylinder housing.

32. Handling device as claimed in claim 8,
**characterised in that**
a preferably strip-shaped insertion tool (63) is attached to the side of and projecting out from at least one longitudinal face of the suction gripper (27) .

33. Handling device as claimed in claim 8,
**characterised in that**
the suction gripper is sub-divided into two mutually pivotable parts with the pivot axis disposed in the suction bell plane (36).

## Revendications

1. Procédé pour la manipulation automatique de tapis en résine (24, 25, 31) de forme et de grandeur différentes pour la fabrication de pièces en SMC au moyen d'un préhenseur (27) manoeuvrable par un dispositif de manipulation (7) mobile à plusieurs axes, avec les étapes suivantes de procédé de manipulation :
- les tapis en résine (24, 25, 31) reposant sur un substrat (3) plat-plan sont saisis sur leur face plate supérieure accessible au moyen d'un vide simultanément appliqué sur une pluralité de points de prise, pris dans un état plan, c'est-à-dire pratiquement exempt de flexion, et transportés,
- les ventouses (35) utilisées pour le transfert du vide du préhenseur aspirant (27) à la surface des tapis en résine (24, 25, 31), composées d'un matériau non flexible et pourvues sur leur côté de contact d'un bord (38) de section en pointe à la façon d'une cuvette sont avant activation du vide hermétiquement pressées sur la surface des tapis en résine (24, 25, 31) plastiques,
- après dépôt d'un ou de plusieurs tapis en résine (24, 25, 31) transportés, les bords (38) des ventouses (35) sont mécaniquement nettoyés au moyen de brosses (55, 55') rotatives.

2. Procédé selon la revendication 1,
**caractérisé en ce que** par une sélection de forme et de grandeur de la trame des ventouses (35) du préhenseur aspirant (27) activées par application de vide et disposées en trame, celui-ci est adapté à la forme et à la grandeur de chaque tapis en résine (24, 25, 31) à manipuler.

3. Procédé selon la revendication 1,
**caractérisé en ce que** le tapis en résine (24, 25, 31) est par dépose dans un moule de formage par le préhenseur aspirant (27) adapté à la forme dudit moule de formage (18) et formé dans la gravure de celui-ci.

4. Procédé selon la revendication 3,
**caractérisé en ce que** le formage du tapis en résine (24, 25, 31) par dépose est exécuté par mouvement d'élévation défini des ventouses (35) en relation avec le préhenseur aspirant (27).

5. Procédé selon la revendication 3,
**caractérisé en ce que** le formage du tapis en résine (24, 25, 31) par dépose est d'abord exécuté par dépose partielle d'une première moitié du tapis en résine (24, 25, 31), le préhenseur aspirant (27) étant en position oblique, et **en ce que** la dépose de la deuxième moitié du tapis en résine (24, 25, 31) est également exécutée après décollement du préhenseur aspirant (27) de la moitié formée et pivotement consécutif de celui-ci (27).

6. Procédé selon la revendication 3,
**caractérisé en ce que** le formage du tapis en résine par dépose est exécuté par désaxement défini du préhenseur aspirant relativement à un axe de pivotement formé par les plans de ventouses.

7. Procédé selon la revendication 1,
**caractérisé en ce que** pour la manipulation et le transport de piles de plusieurs couches de tapis en résine, la natte en résine supérieure dans la pile est saisie par vide sur sa face supérieure, les couches inférieures des tapis en résine étant mécaniquement maintenues contre la couche supérieure par des broches de fixation (64) inclinées en plongée latérale.

8. Dispositif pour la manipulation automatique de tapis en résine (24,25,31) de forme et de grandeur différentes pour la fabrication de pièces en SMC, avec un préhenseur aspirant (27) manoeuvrable par un dispositif de manipulation (7) mobile à plusieurs axes pour la saisie simultanée en plusieurs points des tapis en résine sur leur face supérieure, notamment pour l'application du procédé selon la revendication 1, où les caractéristiques suivantes sont prévues pour le dispositif de manipulation :
- une pluralité de ventouses (35) dont l'extrémité ouverte est dirigée vers le bas et formant ensemble un plan de ventouses (36) avec leurs bords (38) est prévue dans la partie inférieure du préhenseur aspirant (27), lesdites ventouses étant disposées par répartition en forme de trame sur une surface correspondant à la surface du plus grand tapis en résine à manipuler, l'écartement transversal (t) mutuel entre les ventouses (35) dans la trame étant mesuré de manière que le plus petit tapis en résine à manipuler puisse couvrir deux ventouses (35) au minimum, et chaque ventouse (35) étant isolément manoeuvrable (raccord 37), un vide pouvant lui être appliqué,
- les ventouses (35) composées d'un matériau non flexible présentent un bord (38) de section en pointe à la façon d'une cuvette et une surface intérieure et extérieure à peu près cylindrique à proximité de leur bord,
- au moins une brosse de nettoyage (55, 55') à rotation entraînable est disposée dans la zone d'action du dispositif de manipulation (7) manoeuvrant le préhenseur aspirant (27), avec laquelle les bords (38) de toutes les ventouses (35) peuvent être amenés en contact de nettoyage.

9. Dispositif de manipulation selon la revendication 8,
**caractérisé en ce que** chaque ventouse (35) est maintenue avec mobilité d'élévation axialement et orthogonalement au plan des ventouses (36) et reliée à un accumulateur de force (45) correspondant manoeuvrable en soi de manière que chaque ventouse (35) puisse en soi être accélérée par une instruction de commande respective d'une position de repos vers une position de prise axialement décalée par rapport à celle-ci.

10. Dispositif de manipulation selon la revendication 8,
**caractérisé en ce que** le compartiment intérieur à symétrie de révolution inclus dans une ventouse (35) au-dessus du bord (38) présente une hauteur axiale (h) représentant environ 25 à 40 % du diamètre au bord(d).

11. Dispositif de manipulation selon la revendication 8,
**caractérisé en ce que** le fond supérieur (39) du compartiment intérieur entouré par la ventouse (35) présente une forme de surface arrondie depuis la circonférence vers le fond (39), similaire à un ellipsoïde de révolution à la manière d'un fond de cuvette.

12. Dispositif de manipulation selon la revendication 8,
**caractérisé en ce que** le diamètre (d) au bord de chaque ventouse (35) est de 2,5 à 10 cm environ, préférentiellement de 3 à 4 cm.

13. Dispositif de manipulation selon la revendication 8,
**caractérisé en ce que** le volume intérieur de chaque ventouse (35) est de 3 à 300 cm³ environ, préférentiellement de 5 à 20 cm³.

14. Dispositif de manipulation selon la revendication 8,
**caractérisé en ce que** la cote d'écartement (t) de la trame formée par la répartition en surface des ventouses (35) sur le plan des ventouses (36) représente 120 à 150 % environ du diamètre (d) des ventouses (35).

15. Dispositif de manipulation selon la revendication 8,
**caractérisé en ce que** la trame formée par la répartition en surface des ventouses (35) sur le plan des ventouses (36) est de forme hexagonale ou orthogonale.

16. Dispositif de manipulation selon la revendication 8,
**caractérisé en ce que** chaque ventouse (35) est au moins indirectement reliée au préhenseur aspirant (27) par une pièce intermédiaire (40) en caoutchouc, composée d'un ressort à boudin ou d'un soufflet, appliquée au sommet de la ventouse (35) et permettant un pivotement élastique.

17. Dispositif de manipulation selon la revendication 16,
**caractérisé en ce que** la pièce intermédiaire (40) est axialement creuse (alésage 50') et **en ce que** le raccord de vide (37) de la ventouse (35) correspondante est formé au-dessus de la pièce intermédiaire (40) de manière que le vide soit conductible vers la ventouse (35) au travers de la pièce intermédiaire (40).

18. Dispositif de manipulation selon la revendication 8,
**caractérisé en ce que** plusieurs brosses de nettoyage (55) en forme de rouleau sont disposées parallèlement entre elles sur un plan horizontal dans la zone d'action du dispositif de manipulation (7) du préhenseur aspirant (27).

19. Dispositif de manipulation selon la revendication 18,
**caractérisé en ce que** les brosses de nettoyage (55) en forme de rouleau sont profilées par rapport à leurs extrémités gainées disposées au-delà des extrémités des crins - en sens axial - en sorte que des franges de crins longs s'étendant axialement alternent avec des franges de crins courts en allant vers la circonférence.

20. Dispositif de manipulation selon la revendication 19,
**caractérisé en ce que** les franges de crins longs s'étendant axialement et les franges de crins longs intercalées sont inclinées dans le sens axial et s'étendent le long d'une ligne hélicoïdale à forte pente.

21. Dispositif de manipulation selon la revendication 8,
**caractérisé en ce qu'** une pluralité de brosses de nettoyage (55') rotatives sont également disposées en trame sur un plan, dans une trame identique à celle des ventouses (35), les crins des brosses de nettoyage rondes (55') étant au moins alignés à peu près parallèlement à l'axe de rotation et une brosse de nettoyage propre (55') étant affectée à chaque ventouse (35).

22. Dispositif de manipulation selon la revendication 21,
**caractérisé en ce que** les crins des brosses de nettoyage (55') sont de longueurs différentes, en l'occurrence plus courts sur le bord extérieur qu'au centre de la brosse, de manière à produire une forme profilée de la brosse de nettoyage (55') adaptée à la forme de section intérieure de la ventouse (35).

23. Dispositif de manipulation selon la revendication 21,
**caractérisé en ce que** les brosses de nettoyage (55') sont toutes disposées sur un plan commun vertical.

24. Dispositif de manipulation selon la revendication 18 ou 21,
**caractérisé en ce que** le maintien des brosses de nettoyage (55, 55') permet leur changement facile.

25. Dispositif de manipulation selon la revendication 8,
**caractérisé en ce que** des guides de broches (66) pivotants à broches de fixation à extension télescopique (64) sont disposés au bord et/ou à l'intérieur de la trame des ventouses (35), lesquels sont manoeuvrables chacun par mouvement de va-et-vient entre deux positions finales définies par des butées réglables (entraînement 65), les guides de broches (66) étant dans une première position finale - position de retrait - appliqués à plat contre le préhenseur aspirant (27) et pivotés derrière le plan des ventouses (36), et dans l'autre position finale opposée au plan des ventouses (36) - position de travail - alignés en inclinaison sur le tapis en résine (24, 25, 31) à saisir.

26. Dispositif de manipulation selon la revendication 25,
**caractérisé en ce qu'**en position de retrait complet, chaque extrémité antérieure des broches de fixation à extension télescopique (64) dépasse axialement de la grandeur de la profondeur de plongée du guide de broche (66) correspondant.

27. Dispositif de manipulation selon la revendication 8,
**caractérisé en ce que** le dispositif de manipulation (7) du préhenseur aspirant (27) est formé comme robot industriel à plusieurs axes, entièrement mobile.

28. Dispositif de manipulation selon la revendication 8,
**caractérisé en ce que** chaque ventouse (35) est maintenue à l'extrémité libre de la tige de piston (46) d'un cylindre de levage (45) non flexible fixé dans le préhenseur aspirant (27) et **en ce que** chacune est en soi élevable et abaissable orthogonalement au plan des ventouses (36).

29. Dispositif de manipulation selon la revendication 28,
**caractérisé en ce que** chaque ventouse (35) est maintenue par intercalation d'une pièce intermédiaire (40) permettant un pivotement élastique en caoutchouc, composée d'un ressort à boudin ou d'un soufflet, à l'extrémité libre de la tige de piston (46) du cylindre de levage (45) correspondant.

30. Dispositif de manipulation selon la revendication 28 ou 29,
**caractérisé en ce que** les tiges de piston (46) des cylindres de levage (45) et le cas échéant les pièces intermédiaires (40) élastiques sont respectivement pourvues d'un alésage (50, 50') ou d'une canalisation de fluide traversant axialement celles-ci, **en ce que** les tiges de piston (46) sont hermétiquement coulissées hors des carters de cylindre dans la zone supérieure, et **en ce que** les raccords de vide (37) pour les ventouses (35) sont respectivement disposés sur les extrémités de tiges de piston supérieures, de manière que le vide de chaque ventouse (35) correspondante soit conductible au travers de la tige de piston (46) et le cas échéant au travers de la pièce intermédiaire (40) élastique.

31. Dispositif de manipulation selon la revendication 28,
**caractérisé en ce que** les tiges de piston (46) des cylindres de levage (45) sont également coulissées hors des carters de cylindre dans la zone supérieure et **en ce qu'**un frein de tige de piston (52) actionnable et pourvu d'un raccord de commande (53), facilement réglable axialement en fonction de l'état d'actionnement sur la tige de piston (46) ou fixé sur elle, est disposé sur la partie librement accessible de chaque tige de piston (46), lequel sert à la limitation axiale de la course de tige de piston en coopération avec la face frontale extérieure (47) du carter de cylindre.

32. Dispositif de manipulation selon la revendication 8,
**caractérisé en ce qu'**un outil de formage (63) est fixé sur un côté longitudinal au moins du préhenseur aspirant (27), dépassant latéralement de celui-ci, préférentiellement en forme de baguette.

33. Dispositif de manipulation selon la revendication 8,
**caractérisé en ce que** le préhenseur aspirant est divisé en deux parties pivotant l'une vers l'autre, l'axe de pivotement étant disposé sur le plan des ventouses (36).
